# NEUE EUROPÄISCHE PATENTSCHRIFT

(11) **EP 1 322 923 B2**
(45) Veröffentlichungstag und Bekanntmachung des Hinweises auf die Entscheidung über den Einspruch: **05.12.2012**
(45) Hinweis auf die Patenterteilung: 30.08.2006
(21) Anmeldenummer: 01969128.6
(22) Anmeldetag: 04.10.2001
(51) Int. Cl.: G01G 13/285, G01G 17/06

(54) **VORRICHTUNG MIT EINEM WERKZEUGHALTER, EINEM WERKZEUG UND EINER WAAGE**
DEVICE COMPRISING A TOOL HOLDER, A TOOL AND SCALES
DISPOSITIF COMPRENANT UN PORTE-OUTIL, UN OUTIL ET UNE BALANCE

(30) Priorität: 06.10.2000 CH 198000
(43) Veröffentlichungstag der Anmeldung: 02.07.2003
(73) Patentinhaber: Chemspeed Technologies AG, 4302 Augst (CH)
(72) Erfinder: GÜLLER, Rolf, CH-5027 Herznach (CH); SCHRÖER, Josef, CH-4132 Muttenz (CH); FRANK, Paul, CH-6373 Ennetbürgen (CH); METZGER, Franz, CH-4055 Basel (CH); BACHMANN, Christoph, CH-4415 Lausen (CH); KLOKOW, Gerhard, 79618 Rheinfelden (DE); ZAHND, Bernhard, CH-4125 Riehen (CH)
(74) Vertreter: Bohest AG
(86) Internationale Anmeldenummer: PCT/CH2001/000600
(87) Internationale Veröffentlichungsnummer: WO 2002/029369

(56) Entgegenhaltungen:
- EP-A1- 0 353 197
- WO-A1-98/26595
- DE-A- 3 617 595
- DE-A- 3 801 218
- DE-A- 4 002 255
- DE-A1- 2 448 031
- DE-A1- 3 027 784
- DE-A1- 19 907 619
- FR-A- 2 310 710
- GB-A- 2 151 800
- GB-A- 2 284 901
- JP-A- 03 202 720
- US-A- 4 171 067
- US-A- 4 337 878
- US-A- 4 413 691
- US-A- 4 804 111
- US-A- 4 805 673
- US-A- 4 880 142
- US-A- 4 959 947
- US-A- 4 976 377
- US-A- 5 038 839
- US-A- 5 067 553
- US-A- 5 287 896
- US-A- 5 363 885
- US-A- 5 431 201
- US-A- 5 660 792
- US-A- 5 738 153
- US-A- 5 756 304
- US-A- 5 873 394

## Beschreibung

Die vorliegende Erfindung bezieht sich auf eine Vorrichtung mit einem Werkzeughalter, der in einer x-Richtung und einer dazu senkrechten z-Richtung verstellbar ist, und einem am Werkzeughalter befestigten Werkzeug in Form eines Dosierkopfs. Ein weiterer Aspekt der Erfindung betrifft das Abwägen einer gewünschten Substanzmenge mit einer solchen Vorrichtung.

Derartige Vorrichtungen werden unter anderem zur automatischen Zudosierung von Substanzen in eine Mehrzahl von Reaktionsgefässe oder Reagenzgläser, die z.B. nebeneinander angeordnet sind, verwendet.

Bei einer unter der Bezeichnung Caco-2 Assay bekannten Vorrichtung der Firma Mettler Toledo Bohdan, Greifensee, Schweiz, sind zwei Werkzeughalter mit unterschiedlichen Werkzeugen vorhanden. Die Werkzeughalter sind in einer horizontalen x-Richtung, einer dazu senkrechten, horizontalen y-Richtung und einer dazu senkrechten, vertikalen z-Richtung verstellbar und können so softwaregesteuert nebeneinander angeordnete Reaktionsgefässe bedienen. Eines der Werkzeuge ist zur Zudosierung von Flüssigkeit als Dosierkopf in Form eines Viernadelkopfs mit vier parallelen Hohlnadeln, die auseinanderspreizbar sind, ausgebildet. Das andere Werkzeug ist ein Greifer zum Handhaben von Substanzplatten mit einer Vielzahl von Ausnehmungen zur Substanzaufnahme. Für das Wägen von von der Vorrichtung Handhabbarem ist eine Waage vorgesehen, auf die z.B. eine entsprechende Substanzplatte oder ein Reagenzglas gestellt wird.

Die beiden fix installierten Werkzeuge ermöglichen zwar das Handling von Flüssigkeiten und Festkörpern, beispielsweise aber nicht das Zudosieren eines Feststoffs direkt in ein Reaktionsgefäss. Ausserdem sind zwei Werkzeughalter vorhanden, die unabhängig voneinander verstellbar sein müssen,
wobei darauf geachtet werden muss, dass sie sich nicht in die Quere kommen. Schliesslich ist das genaue Abwägen einer bestimmten Substanzmenge relativ aufwendig.

In der DE 40 02 255 A1 ist eine fest montierte Vorrichtung zum Dosieren von Flüssigkeiten durch Abgabe aus mindestens einem mit einem Flüssigkeitsvorrat verbundenen Dosierventil offenbart, die eine Hauptwaage aufweist, auf der ein Behälter zur Aufnahme von Flüssigkeit positioniert werden kann. Diese Hauptwaage hat einen grossen Wiegebereich von beispielsweise mehreren Tonnen und daher eine verhältnismässig geringe Genauigkeit von beispielsweise ± 100 g. Zwischen Dosierventil und Flüssigkeitsvorrat ist ein Pufferbehälter vorhanden, dessen Gewicht mittels einer Feinwaage feststellbar ist und der zur Abgabe kleiner Flüssigkeitsmengen aus dem Dosierventil gegenüber dem Flüssigkeitsvorrat abdichtbar ist. Mit der Feinwaage kann das Gewicht des Pufferbehälters und der darin vorhandenen Flüssigkeit gemäss Offenbarung mit einer Genauigkeit von beispielsweise ± 0,1 g gemessen und daraus die abgegebene Flüssigkeitsmenge bestimmt werden. Die Genauigkeit des Gewichts der abgegebenen Flüssigkeitsmenge ist einerseits dadurch beschränkt, dass der Pufferbehälter über flexible Leitungen mit dem Vorratsbehälter und mit dem Dosierventil verbunden ist, was die Messung beeinträchtigt, und anderseits dadurch, dass die Flüssigkeit nicht direkt vom Pufferbehälter abgegeben wird, sondern zuerst über eine Leitung zum Dosierventil gelangt und erst von diesem abgegeben wird. Ausserdem verhindert der aufwendige Aufbau mit Vorratsbehälter, Pufferbehälter und Dosierventil, die über Leitungen verbunden sind, praktisch die Dosiervorrichtung mobil auszubilden bzw. an einem Roboterarm oder Linearachsensystem anzubringen.

Angesichts der Nachteile der oben beschriebenen Vorrichtungen des Standes der Technik liegt der Erfindung die Aufgabe zugrunde, eine Vorrichtung zu schaffen, mit der das Abwägen einer gewünschten Substanzmenge vereinfacht möglich sein soll.

Diese Aufgabe wird durch die erfindungsgemässe Vorrichtung gelöst, wie sie im unabhängigen Patentanspruch 1 definiert ist. Bevorzugte Ausführungsvarianten ergeben sich aus den abhängigen Patentansprüchen.

Die Erfindung umfasst unter anderen, dass bei einer Vorrichtung mit einem Werkzeughalter, der in einer x-Richtung und einer dazu senkrechten z-Richtung verstellbar ist, und einem am Werkzeughalter befestigten Werkzeug in Form eines Dosierkopfs am Werkzeug oder am Werkzeughalter eine Waage angeordnet ist, mit welcher vom Werkzeug aufgenommene oder abgegebene oder abzugebende Substanz oder Kapseln wägbar ist bzw. sind.

Dadurch, dass direkt am Werkzeug oder am Werkzeughalter eine Waage angeordnet ist, kann ein Wägen einer aufgenommenen oder abgegebenen oder abzugebenden Substanz, einer Substanzkapsel oder eines sonstigen Gegenstands erfolgen, ohne dass dazu die Substanz, die Substanzkapsel oder der sonstige Gegenstand bzw. das Werkzeug auf eine separate Waage aufgesetzt zu werden braucht. Das Wägen wird somit wesentlich vereinfacht und ist innerhalb des Aktionsbereichs der Vorrichtung praktisch ortsunabhängig und kann auch dort erfolgen, wo es aus technischen Gründen erschwert oder nicht möglich ist, eine Waage zu plazieren, z.B. unter einem geschüttelten Reaktionsgefäss.

Als Waage kann z.B. eine Waage mit im Minimum einem Wägebereich von 0 bis 2 kg und einer Genauigkeit von 0,1 g verwendet werden. Solche Waagen sind beispielsweise bei der Firma Sartorius AG, 37070 Göttingen, Deutschland, erhältlich. Vorzugsweise wird jedoch eine genauere Waage mit einer Genauigkeit von 0,1 mg verwendet.

Vorzugsweise ist bzw. sind die Substanz oder Kapsel(n) von einer Dosiereinrichtung abgebbar oder aufnehmbar, die von der Waage mitgewogen wird. An der Dosiereinrichtung hängengebliebene Substanz wird so immer noch mitgewogen und nicht als bereits zudosiert registriert.

Mit Vorteil führt der Dosierkopf abzugebende Substanz vollständig mit sich mit. Er muss so nicht, beispielsweise über Schläuche, alimentiert werden, was die Wägegenauigkeit beeinträchtigen würde.

Bei einem vorteilhaften Ausführungsbeispiel ist die Waage am Werkzeug angeordnet und das Werkzeug ohne Schrauben zu lösen vom Werkzeughalter abnehmbar und wieder an diesen anbringbar.

Vorzugsweise ist die Dosiereinrichtung so an der Waage angeordnet, dass die Dosiereinrichtung ohne Schrauben zu lösen von der Waage abnehmbar und wieder an diese anbringbar ist, insbesondere durch Abheben und wieder Aufsetzen. Dadurch können auf einfache Weise verschiedenartige Dosiereinrichtungen eingesetzt werden, um z.B. Flüssigkeiten oder feste Substanzen nacheinander zu dosieren. Die Handhabung der Dosiereinrichtungen kann manuell oder automatisch erfolgen.

Mit Vorteil weist die Dosiereinrichtung eine einen Vorratsbehälter umfassende Dosiereinheit und eine Antriebseinheit auf, wobei die Dosiereinheit ohne Schrauben zu lösen von der Antriebseinheit abnehmbar und wieder an diese anbringbar ist, insbesondere durch Abheben und wieder Aufsetzen. Dadurch können verschiedene Substanzen in mehreren Dosiereinheiten vorbereitet werden und nacheinander mit der gleichen Antriebseinheit dosiert werden. Die Handhabung der Dosiereinheiten kann manuell oder automatisch erfolgen.

Mit Vorteil weist die erfindungsgemässe Vorrichtung neben der am Werkzeug oder am Werkzeughalter angeordneten ersten Waage noch eine zweite Waage auf, wobei die zweite Waage vorzugsweise den Behälter zur vorläufigen Aufnahme abzugebender Substanz trägt und zur Messung des Gewichts von vorläufig aufgenommener abzugebender Substanz dient, während mit der ersten Waage das Gewicht auch von Substanz messbar ist, die noch nicht in den Behälter zur vorläufigen Aufnahme abzugebender Substanz abgegeben ist. Dies ermöglicht eine genauere Gewichtsmessung, insbesondere abzugebender Substanz, mit Hilfe von Kontrollmessungen der zweiten Waage.

Bei einem bevorzugten Ausführungsbeispiel ist der Werkzeughalter um die z-Richtung drehbar. Dies ermöglicht insbesondere das Drehen des Werkzeugs um z.B. 90°.

Vorzugsweise ist der Werkzeughalter zusätzlich in einer zu der x-Richtung und der z-Richtung senkrechten y-Richtung verstellbar. Dies ermöglicht das Anordnen von Reaktionsgefässen, Eduktfläschchen etc. auf einer grösseren Fläche.

Bei einer vorteilhaften Ausführungsvariante erfolgt die Befestigung des Werkzeugs am Werkzeughalter mittels Magneten, wobei vorzugsweise von zwei sich gegenseitig anziehenden Permanentmagneten der eine am Werkzeughalter und der andere am Werkzeug angeordnet ist und die Wirkung der gegenseitigen Anziehung der beiden Permanentmagnete mittels mindestens eines Elektromagnets aufhebbar ist. Die Verbindung von Werkzeug und Werkzeughalter mittels Magneten ermöglicht ein automatisches Befestigen des Werkzeugs am Werkzeughalter, indem beispielsweise der Werkzeughalter über das Werkzeug geführt und dann auf dieses abgesenkt wird oder der Werkzeughalter seitlich an das Werkzeug gefahren wird. Auch das Lösen des Werkzeugs vom Werkzeughalter durch Aktivieren des mindestens einen Elektromagnets mittels Stromimpulsen trägt dazu bei, dass das Auswechseln von Werkzeugen automatisch erfolgen kann.

Bei alternativen vorteilhaften Ausführungsvarianten erfolgt die Befestigung des Werkzeugs am Werkzeughalter durch Verschrauben, mittels eines Bajonettverschlusses oder mittels einer Klemmverbindung etc. Diese Befestigungsarten sind zwar im Normalfall aufwendiger zu realisieren, aber relativ einfach zu automatisieren, insbesondere wenn der Werkzeughalter um die z-Richtung drehbar ist.

Vorteilhafterweise ist das Werkzeug ein Kapseltransportkopf, mit welchem eine Kapsel, vorzugsweise durch Ansaugen, aufnehmbar und abgebbar ist. Ein derartiges Werkzeug ermöglicht das Transportieren von Substanzen in Kapseln oder ähnlichen Behältern.

Bevorzugt ist das Werkzeug ein Matrizenkapseltransportkopf, mit welchem matrizenartig angeordnete Kapseln, vorzugsweise durch Ansaugen, aufnehmbar und die Kapseln einzeln, gemeinsam oder gruppenweise abgebbar sind. Auch der Matrizenkapseltransportkopf ermöglicht das Transportieren von Substanzen in Kapseln, wobei eine Vielzahl von matrizenartig angeordneten Kapseln gleichzeitig gehandhabt werden können.

Mit Vorteil ist das Werkzeug ein Kapselhandlingkopf, mit welchem mindestens eine Kapsel aufnehmbar ist, die in ihm, vorzugsweise mit einer Hohlnadel, öffenbar ist und in welchem vorzugsweise der Inhalt der Kapsel mit einer anderen Substanz, insbesondere einem Lösungsmittel, mischbar ist. Das Mischen kann beispielsweise durch Zugeben von Lösungsmittel in die Kapsel, Aufsaugen von Substanz und Lösungsmittel aus der Kapsel und wieder Zugeben des Aufgesaugten in die Kapsel erfolgen. Alternativ kann mit der Hohlnadel auch Substanz aus der Kapsel gesogen und an einem anderen Ort wieder abgegeben werden. Mit dem erfindungsgemässen Kapselhandlingkopf können chemische Reaktionen ausserhalb eines Reaktionsgefässes noch besser vorbereitet werden.

Bei einer bevorzugten Ausführungsvariante ist das Werkzeug ein Matrizenkapselhandlingkopf, mit welchem mehrere matrizenartig angeordnete Kapseln aufnehmbar sind, die in ihm, vorzugsweise mit Hohlnadeln, öffenbar sind und in welchem vorzugsweise jeweils der Inhalt einer Kapsel mit einer anderen Substanz, insbesondere einem Lösungsmittel, mischbar ist. Das Mischen kann beispielsweise durch Zugeben von Lösungsmittel in die Kapsel, Aufsaugen von Substanz und Lösungsmittel aus der Kapsel und wieder Zugeben des Aufgesaugten in die Kapsel erfolgen. Alternativ kann mit der Hohlnadel auch Substanz aus der Kapsel gesogen und an einem anderen Ort wieder abgegeben werden. Auch der Matrizenkapselhandlingkopf ermöglicht das Handling von Substanzen in Kapseln und das Vorbereiten von chemischen Reaktionen, wobei eine Vielzahl von matrizenartig angeordneten Kapseln gleichzeitig aufgenommen und bearbeitet werden können.

Bei einer anderen bevorzugten Ausführungsvariante ist das Werkzeug ein Kapselabgabekopf, in dem eine Vielzahl von Kapseln gespeichert sind, die einzeln, gemeinsam oder gruppenweise abgebbar sind, wobei vorzugsweise die Kapseln im Kapselabgabekopf öffenbar sind und noch bevorzugter deren Inhalt im Kapselabgabekopf mit einer anderen Substanz, insbesondere einem Lösungsmittel, mischbar ist. Dank dem erfindungsgemässen Kapselabgabekopf können chemische Reaktionen ausserhalb eines Reaktionsgefässes weitgehend vorbereitet werden und zu deren Durchführung einfach die geeigneten Kapseln bzw. deren Inhalt in das Reaktionsgefäss gegeben werden.

Mit Vorteil weist die erfindungsgemässe Vorrichtung eine, vorzugsweise am Werkzeughalter angebrachte, Kamera auf, mit welcher ein Bereich unterhalb des Werkzeughalters filmbar ist, sowie einen Steuercomputer mit einer Bildverarbeitungseinheit, die die von der Kamera gefilmten Bilder auswertet, wobei vorzugsweise aufgrund des Auswerteresultats die Verstellung des Werkzeughalters und allenfalls eine Auswechslung des Werkzeugs steuerbar ist.

Bei einer vorteilhaften Alternativvariante umfasst die erfindungsgemässe Vorrichtung ein, vorzugsweise am Werkzeughalter angebrachtes, Infrarotanalysegerät mit einem Infrarotsender, mit welchem Infrarotwellen in einen Bereich unterhalb des Werkzeughalters strahlbar sind, und einem Infrarotsensor, mit welchem reflektierte Infrarotwellen messbar sind, sowie einen Steuercomputer mit einer Messwertverarbeitungseinheit, die die vom Infrarotsensor gemessenen reflektierten Infrarotwellen auswertet, wobei vorzugsweise aufgrund des Auswerteresultats die Verstellung des Werkzeughalters und allenfalls eine Auswechslung des Werkzeugs und/oder die zu dosierende Menge an Substanz steuerbar ist. Das genaue Funktionsprinzip eines solchen Infrarotanalysegeräts ist beispielsweise in der US-A-6 031 233 beschrieben, die hiermit explizit in die vorliegende Beschreibung einbezogen wird.

Die Kamera bzw. das Infrarotanalysegerät ermöglicht zusammen mit dem Steuercomputer ein vollständig automatisches Arbeiten der Vorrichtung, ohne dass eine Bedienperson die handzuhabende Substanz bzw. Kapsel einzuschätzen und danach die Verstellung des Werkzeughalters und/oder eine allfällige Auswechslung des Werkzeugs aktiv zu steuern hat.

Bei einer vorteilhaften Ausführungsvariante umfasst die erfindungsgemässe Vorrichtung einen weiteren Werkzeughalter zur Befestigung eines weiteren Werkzeugs, der in einer x-Richtung und einer dazu senkrechten z-Richtung verstellbar ist, wobei er vorzugsweise zusätzlich um die z-Richtung drehbar und/oder in einer zu der x-Richtung und der z-Richtung senkrechten y-Richtung verstellbar ist. Der zweite Werkzeughalter kann wie der erste ausgebildet und gesteuert sein. Mit zwei oder allenfalls noch mehr Werkzeughaltern mit daran befestigten Werkzeugen kann die Geschwindigkeit der Vorrichtung multipliziert werden, wobei bei der Steuerung darauf geachtet werden muss, dass sich die verschiedenen Werkzeughalter und Werkzeuge nicht gegenseitig behindern.

Ein Verfahren zum Abwägen einer gewünschten Menge an Substanz mit einer Vorrichtung mit einem Werkzeughalter, der in einer x-Richtung und einer dazu senkrechten z-Richtung verstellbar ist, einem am Werkzeughalter befestigten Werkzeug in Form eines Dosierkopfs, und einer am Werkzeug oder am Werkzeughalter angeordneten Waage, mit welcher vom Werkzeug aufgenommene Substanz wägbar ist, ist durch die Schritte gekennzeichnet, dass
a) mit dem Werkzeug Substanz aufgenommen wird;
b) die Substanz gewogen wird;
c) die Differenz des dabei erhaltenen Wägewerts zum gewünschten Sollwert berechnet wird; und
d) bei einer ausserhalb des Rahmens einer gewünschten Genauigkeit liegenden Differenz mit dem Werkzeug abhängig von dieser Differenz Substanz abgegeben oder zusätzliche Substanz aufgenommen wird;
wobei die Schritte b) bis d) wiederholt werden, bis die Differenz im Rahmen einer gewünschten Genauigkeit gleich null ist.

Ein ähnliches Verfahren zum Abgeben einer gewünschten Menge an Substanz mit einer Vorrichtung mit einem Werkzeughalter, der in einer x-Richtung und einer dazu senkrechten z-Richtung verstellbar ist, einem am Werkzeughalter befestigten Werkzeug in Form eines Dosierkopfs, und einer am Werkzeug oder am Werkzeughalter angeordneten Waage, mit welcher vom Werkzeug abzugebende Substanz wägbar ist, wobei die Waage einen Behälter zur vorläufigen Aufnahme abzugebender Substanz trägt, der vollständig entleerbar ist, ist durch die Schritte gekennzeichnet, dass
a) eine Menge an Substanz in den Behälter zur vorläufigen Aufnahme abzugebender Substanz gegeben wird;
b) die Substanz im Behälter gewogen wird;
c) die Differenz des dabei erhaltenen Wägewerts zum gewünschten Sollwert berechnet wird; und
d) bei einer ausserhalb des Rahmens einer gewünschten Genauigkeit liegenden Differenz abhängig von dieser Differenz dem Behälter zusätzliche Substanz zugegeben wird oder der Behälter an einem anderen Ort als einem vorgesehenen Dosierort mindestens teilweise entleert wird und ihm danach wieder Substanz zugegeben wird;
wobei die Schritte b) bis d) wiederholt werden, bis die Differenz im Rahmen einer gewünschten Genauigkeit gleich null ist, wonach die im Behälter vorhandene Substanz durch vollständiges Entleeren des Behälters abgegeben wird.

Ein weiteres ähnliches Verfahren zur Auswahl einer Kapsel mit einer gewünschten Menge an Substanz mit einer Vorrichtung mit einem Werkzeughalter, der in einer x-Richtung und einer dazu senkrechten z-Richtung verstellbar ist, einem am Werkzeughalter befestigten Werkzeug in Form eines Dosierkopfs, und einer am Werkzeug oder am Werkzeughalter angeordneten Waage, mit welcher vom Werkzeug aufgenommene Kapseln wägbar sind, ist durch die Schritte gekennzeichnet, dass
a) mit dem Werkzeug eine Kapsel mit Substanz aufgenommen wird;
b) die Kapsel mit Substanz gewogen wird;
c) die Differenz des dabei erhaltenen Wägewerts zum gewünschten Sollwert berechnet wird; und
d) bei einer ausserhalb des Rahmens einer gewünschten Genauigkeit liegenden Differenz die Kapsel vom Werkzeug wieder abgegeben und eine neue Kapsel mit Substanz aufgenommen wird;
wobei die Schritte b) bis d) wiederholt werden, bis die Differenz im Rahmen einer gewünschten Genauigkeit gleich null ist.

Diese drei nach dem Versuchsprinzip arbeitenden Wägeverfahren ermöglichen auf einfache Weise ein Abwägen einer gewünschten Substanzmenge oder eines gewünschten Gegenstands mit der gewünschten Genauigkeit an einem beliebigen Ort innerhalb des Aktionsbereichs der Vorrichtung. Zudem kann beispielsweise bei der Abgabe von Substanz in z.B. ein Reaktionsgefäss, ein Reagenzglas, eine Substanzplatte, etc. das Gewicht der effektiv abgegebenen Substanzmenge nochmals gemessen werden. Dies hat zwei wichtige Vorteile: 1) Eine Kontrolle und genauere Bestimmung des effektiven Wertes. 2) Falls z.B. geringe Substanzmengen am Werkzeug hängen bleiben, wird dies festgestellt und kann beispielsweise durch Vibrieren oder Nachdosieren korrigiert werden.

Im folgenden werden die erfindungsgemässen und andere Vorrichtungen unter Bezugnahme auf die beigefügten Zeichnungen und anhand von Ausführungsbeispielen detaillierter beschrieben. Es zeigen:
- Fig. 1 -: einen an einem Linearachsensystem in allen drei Raumrichtungen x, y und z verstellbar und um die z-Richtung drehbar angeordneten Werkzeughalter;
- Fig. 2 -: den Werkzeughalter von Fig. 1, aber zusätzlich mit einer daran angeordneten Waage, mit einem Nadelkopf mit einer Hohlnadel als Werkzeug;
- Fig. 3 -: den Werkzeughalter von Fig. 1, aber zusätzlich mit einer daran angeordneten Waage, mit einem Nadelkopf mit vier zueinander verstellbaren Hohlnadeln als Werkzeug, wobei die vier Hohlnadeln minimal beabstandet sind;
- Fig. 4 -: den Werkzeughalter mit Nadelkopf von Fig. 3, wobei die vier Hohlnadeln maximal beabstandet sind;
- Fig. 5 -: den Werkzeughalter von Fig. 1 mit einem Kapseltransportkopf als Werkzeug;
- Fig. 6 -: den Kapseltransportkopf von Fig. 5 beim Halten einer Kapsel;
- Fig. 7 -: den Kapseltransportkopf von Fig. 5 beim Plazieren einer Kapsel in einem in einer Matrize angeordneten Reaktionsgefäss;

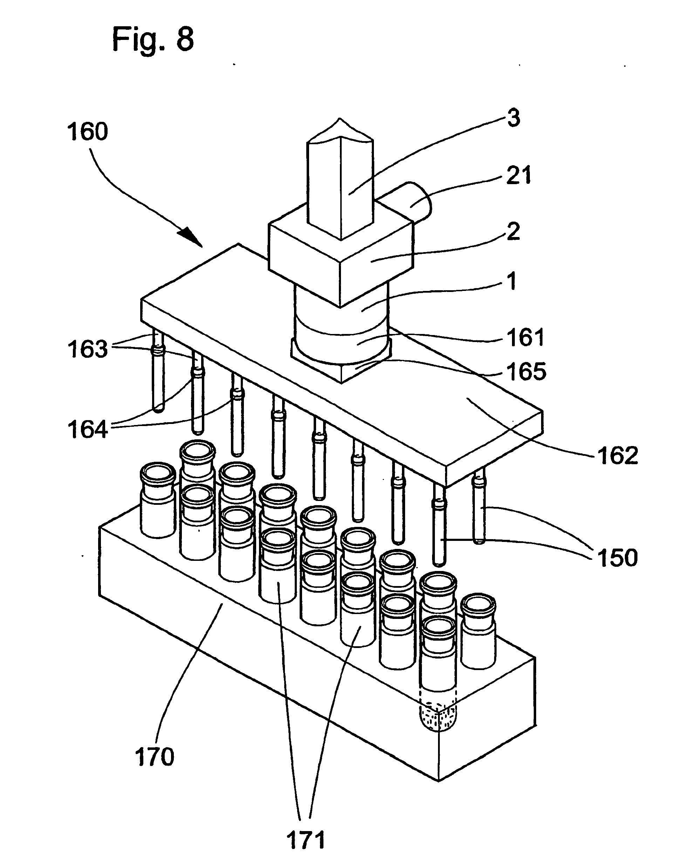

- Fig. 8 -: den Werkzeughalter von Fig. 1 mit einem Matrizenkapseltransportkopf als Werkzeug;
- Fig. 9 -: eine Schnittansicht eines Werkzeugs in Form eines Kapselhandlingkopfs mit Hohlnadel;
- Fig. 10 -: den Kapselhandlingkopf von Fig. 9 am Werkzeughalter von Fig. 1 mit einer aufgenommenen, geschlossenen Kapsel;
- Fig. 11 -: den Kapselhandlingkopf mit aufgenommener Kapsel gemäss Fig. 10 beim Zugeben von Lösungsmittel nach dem Durchstechen der Kapsel mit der Hohlnadel;
- Fig. 12 -: den Kapselhandlingkopf mit durchstochener Kapsel gemäss Fig. 11 beim Abgeben der Kapsel mit nun gelöster Substanz;

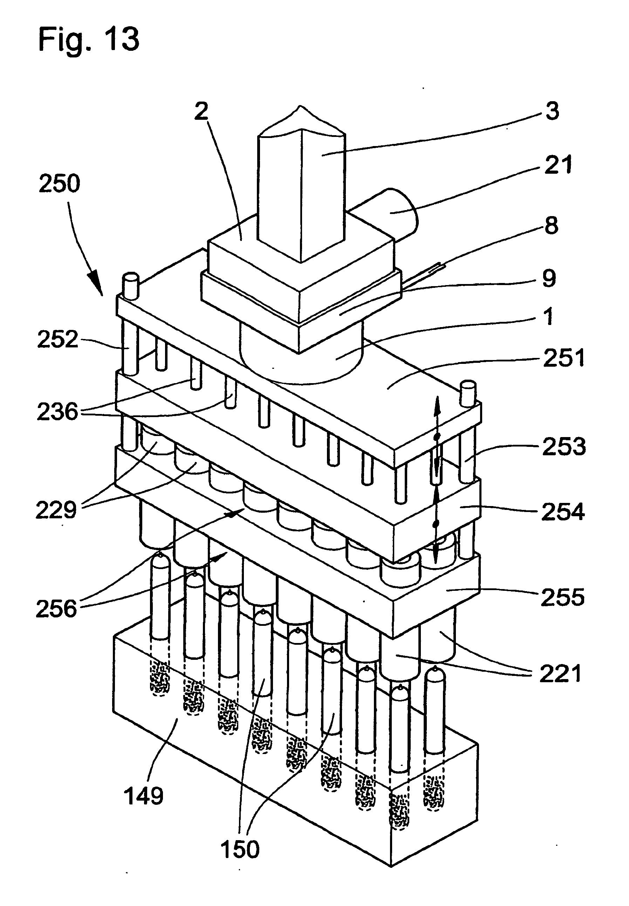

- Fig. 13 -: den Werkzeughalter von Fig. 1, aber zusätzlich mit einer daran angeordneten Waage, mit einem schematisch dargestellten Matrizenkapselhandlingkopf als Werkzeug und in einer Matrize angeordneten Kapseln;

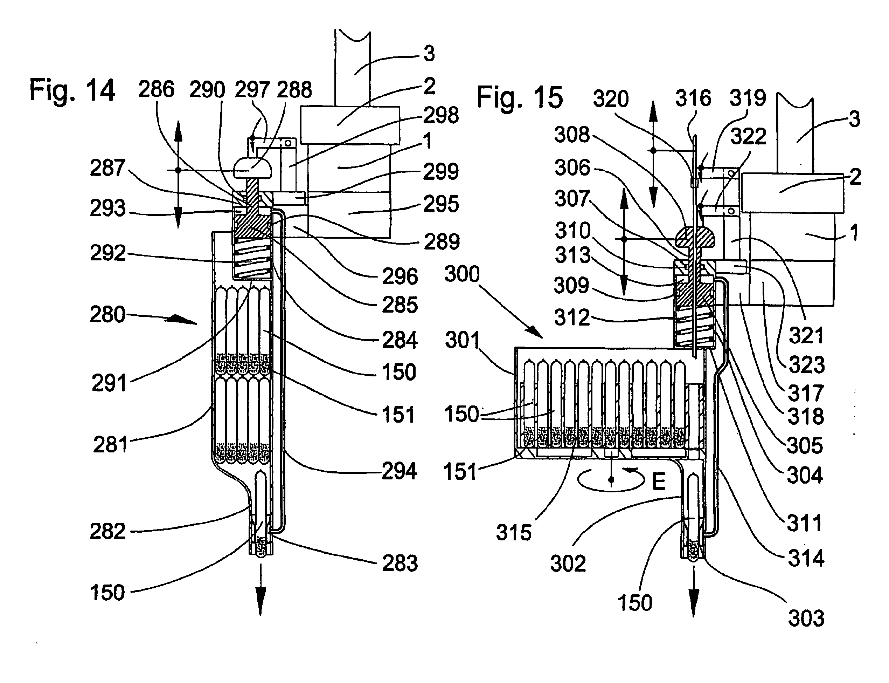

- Fig. 14 -: eine Schnittansicht eines Werkzeugs in Form eines ersten Ausführungsbeispiels eines Kapselabgabekopfs mit einer Vielzahl von gespeicherten Kapseln am Werkzeughalter von Fig. 1;
- Fig. 15 -: eine Schnittansicht eines Werkzeugs in Form eines zweiten Ausführungsbeispiels eines Kapselabgabekopfs mit einer Vielzahl von gespeicherten Kapseln, die im Kapselabgabekopf öffenbar sind, am Werkzeughalter von Fig. 1;
- Fig. 16 -: den Werkzeughalter von Fig. 1 mit einem Schneckendosierkopf als Werkzeug mit einer weggeschwenkten Blende in einer teilweise geschnittenen Ansicht;
- Fig. 17 -: den Werkzeughalter mit Schneckendosierkopf von Fig. 16 mit unter die Schnecke geschwenkter Blende in einer teilweise geschnittenen Ansicht;

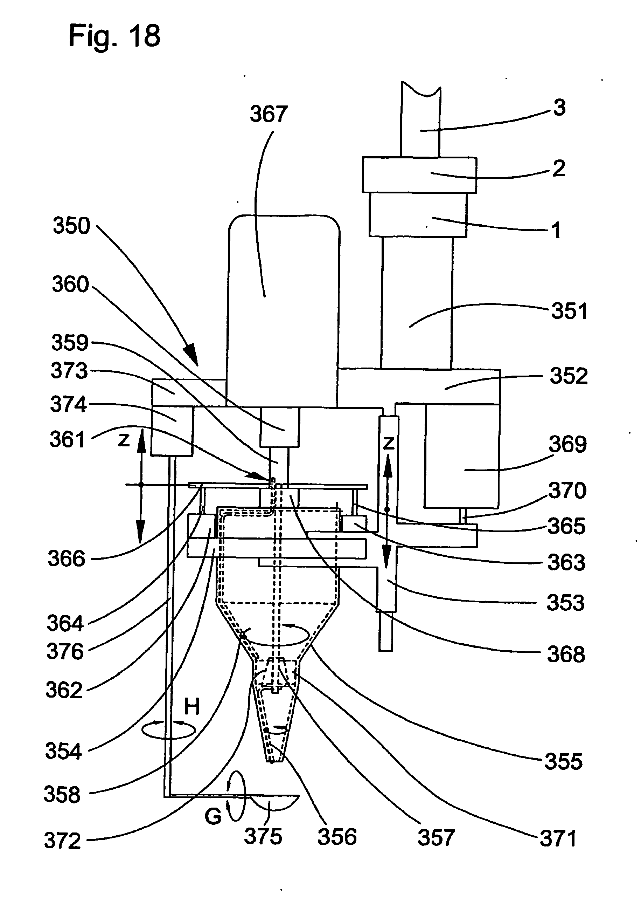

- Fig. 18 -: den Werkzeughalter von Fig. 1 mit einem Feststoffdosierkopf als Werkzeug;
- Fig. 19 -: einen Werkzeughalter mit einem alternativen Schneckendosierkopf mit Wägeeinheit, Dosiereinheit und Antriebseinheit als Werkzeug;
- Fig. 20 -: die Wägeeinheit des Schneckendosierkopfs von Fig. 19;
- Fig. 21 -: die Dosiereinheit des Schneckendosierkopfs von Fig. 19 in einer Perspektivansicht;
- Fig. 22 -: die Dosiereinheit des Schneckendosierkopfs von Fig. 19 in einer Explosionsansicht; und
- Fig. 23 -: die Antriebseinheit des Schneckendosierkopfs von Fig. 19.

### Figur 1

Ein Linearachsensystem zur Aufhängung und Verstellung eines Werkzeughalters 1 umfasst zwei parallel in y-Richtung verlaufende Führungsschienen 6, 61, die in nicht dargestellter Weise ortsfest verankert sind. Die einen Enden der beiden Führungsschienen 6, 61 sind durch eine Drehstange 7 verbunden, die mittels eines Schrittmotors 71 drehbar ist. An den beiden Führungsschienen 6, 61 ist eine obere Laufschiene 5 in y-Richtung verschiebbar befestigt. Die obere Laufschiene 5 ist über zwei Endplatten 52, 53 fest mit einer unteren Laufschiene 51 verbunden. Durch Drehen der Drehstange 7 mittels des Schrittmotors 71 wird im Innern der Führungsschienen 6, 61 jeweils ein Zahnriemen angetrieben, der die Laufschienen 5, 51 in y-Richtung verstellt. Mit Verstellung in y-Richtung ist im vorliegenden Zusammenhang sowohl eine Verstellung in +y- als auch in -y-Richtung (Gegenrichtung) gemeint.

An den beiden Laufschienen 5, 51 ist ein Laufwagen 4 in x-Richtung verschiebbar befestigt. Mit Verschiebung in x-Richtung ist im vorliegenden Zusammenhang wiederum sowohl eine Verschiebung in +x- als auch in -x-Richtung (Gegenrichtung) gemeint. Der Antrieb des Laufwagens 4 erfolgt über einen in der hohlen oberen Laufschiene 5 angeordneten Zahnriemen durch einen Schrittmotor 54.

Am Laufwagen 4 ist eine Werkzeugstange 3 in z-Richtung verschiebbar befestigt. Mit Verschiebung in z-Richtung ist im vorliegenden Zusammenhang wiederum sowohl eine Verschiebung in +z- als auch in -z-Richtung (Gegenrichtung) gemeint. Zur Verstellung der Werkzeugstange 3 ist an dieser über eine Hohlplatte 32 ein Schrittmotor 31 und in der Hohlplatte 32 und der Werkzeugstange 3 ein Zahnriemen angebracht.

Am unteren Ende der Werkzeugstange 3 ist ein Drehantrieb 2 angeordnet, an dem der Werkzeughalter 1 befestigt ist. Mit Hilfe eines Drehmotors 21 ist der Werkzeughalter 1 in Richtung des Pfeils c beidseitig um die z-Richtung herum drehbar. Zur Befestigung eines Werkzeugs besteht der Werkzeughalter 1 im wesentlichen aus einem Permanentmagnet, in dem ein Elektromagnet angeordnet ist.

Am Werkzeughalter 1 ist eine in z-Richtung nach unten gerichtete Kamera 10 angebracht, mit welcher ein Bereich unterhalb des Werkzeughalters 1 filmbar ist. Die von der Kamera 10 gefilmten Bilder werden über eine Datenleitung einer Bildverarbeitungseinheit eines Steuercomputers 11 übermittelt, die diese auswertet. Aufgrund des Auswerteresultats kann dann vom Steuercomputer 11 die Verstellung des Werkzeughalters 1 in x-, y-, z- und c-Richtung durch die Motoren 54, 71, 31 bzw. 21 und die Auswahl, Befestigung oder Loslösung eines Werkzeugs gesteuert werden.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, oder umgekehrt, so wird auf deren Erläuterung in vorangehenden Figurenbeschreibungen Bezug genommen.

### Figur 2

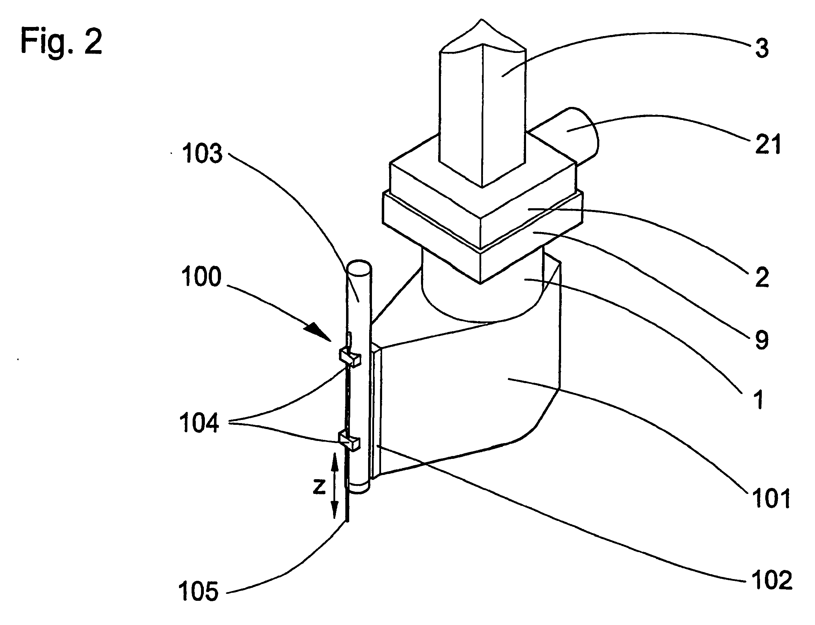

Die in Fig. 2 dargestellte Vorrichtung ist nicht Bestandteil der vorliegenden Erfindung.

Am Werkzeughalter 1 ist hier als Werkzeug ein Nadelkopf 100 mittels eines Permanentmagnets 101 abnehmbar befestigt. Der Permanentmagnet 101 des Nadelkopfs 100 und der Permanentmagnet des Werkzeughalters 1 ziehen sich gegenseitig an, so dass bei entferntem Nadelkopf 100 dieser durch Aufsetzen des Werkzeughalters 1 an letzterem befestigt werden kann, wobei dies automatisch erfolgen kann, d.h. der Nadelkopf 100 muss nicht von Hand am Werkzeughalter 1 angebracht werden. Das Lösen des Nadelkopfs 100 vom Werkzeughalter 1 erfolgt mittels des im Werkzeughalter 1 angeordneten, nicht sichtbaren Elektromagnets, der beim Erhalt eines Stromimpulses die Wirkung der gegenseitigen Anziehung des Permanentmagnets 101 des Nadelkopfs 100 und des Permanentmagnets des Werkzeughalters 1 aufhebt.

Am Permanentmagnet 101 ist über eine Platte 102 ein Linearantrieb 103 angebracht. Eine Hohlnadel 105 ist mittels zwei mit durchgehenden Aufnahmelöchern für die Hohlnadel 105 versehenen Halteteilen 104 am Aussenzylinder des Linearantriebs 103 befestigt. Mit Hilfe des Linearantriebs 103 ist die Hohlnadel 105 in z-Richtung verstellbar.

Eine derartige Hohlnadel 105 kann beispielsweise zum Zudosieren oder Entnehmen von flüssigen Substanzen in bzw. aus Reaktionsgefässen verwendet werden. Insbesondere kann hierzu am oberen Ende der Hohlnadel 105 eine Saug- und/oder Blaseinrichtung angeschlossen werden.

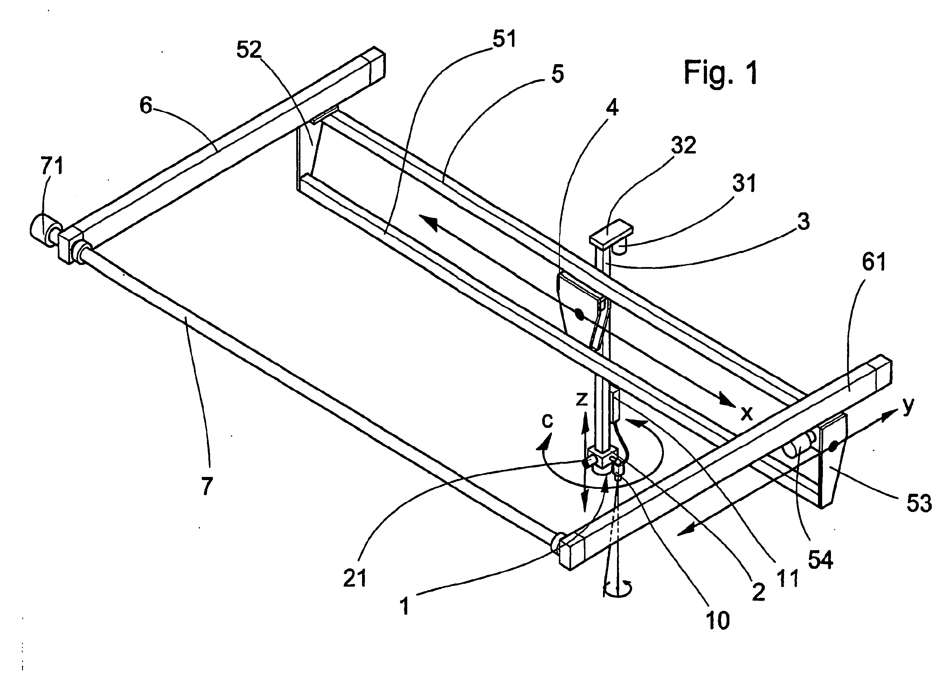

Im Vergleich zu Fig. 1 ist unterhalb des Drehantriebs 2 am Werkzeughalter 1 zusätzlich eine Waage 9 angeordnet, mit welcher das Gesamtgewicht des Werkzeughalters 1, des Nadelkopfs 100 und der in der Hohlnadel 105 vorhandenen Substanz messbar ist. Zieht man von diesem Gesamtgewicht das Gewicht des Werkzeughalters 1 und des Nadelkopfs 100 ab, erhält man das Gewicht der in der Hohlnadel 105 vorhandenen Substanz. Durch Differenzmessungen kann das Gewicht aufgenommener oder abgegebener Substanz bestimmt werden.

### Figuren 3 und 4

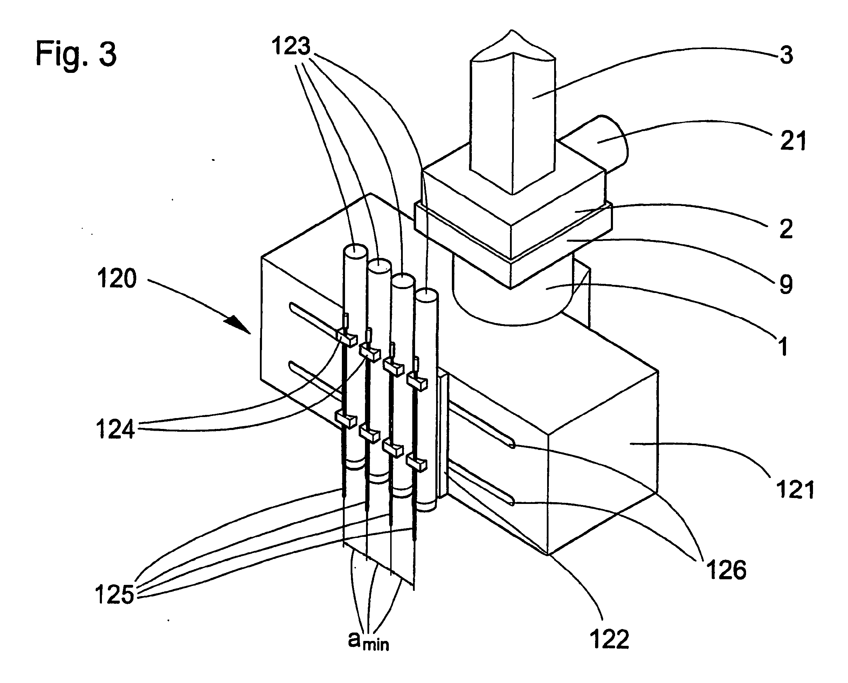

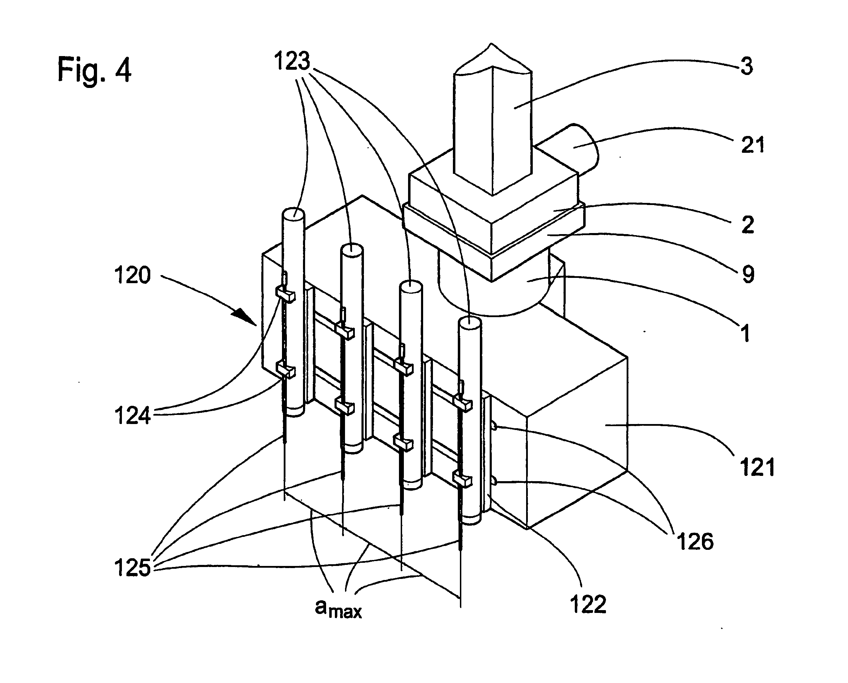

Die in Fig. 3 und 4 dargestellte Vorrichtung ist nicht bestandteil der vorliegenden Erfindung.

Das Werkzeug ist hier durch einen Nadelkopf 120 mit vier Hohlnadeln 125 gebildet, die einzeln in z-Richtung verstellbar sind und deren Abstand zueinander von einem minimalen Abstand amin bis zu einem maximalen Abstand ^{a}max einstellbar ist, wobei der Abstand zweier benachbarter Hohlnadeln 125 jeweils gleich gross ist. Hierzu sind die Hohlnadeln 125 jeweils mittels zweier mit durchgehenden Hohlnadel-Aufnahmelöchern versehenen Halteteile 124 am Aussenzylinder eines Linearantriebs 123 befestigt. Die Linearantriebe 123, mit welchen die Hohlnadeln 125 einzeln in z-Richtung verstellbar sind, sind ihrerseits jeweils an einer zugehörigen Platte 122 angebracht. Die vier Platten 122 sind in zwei Nuten in einem Permanentmagnet 121 verschiebbar angeordnet, wobei der Antrieb hierfür über zwei durch einen Motor angetriebene Spindeln erfolgt, die sich innerhalb des Permanentmagnets 121 befinden. Über den Permanentmagnet 121 ist der Nadelkopf 120, wie im Zusammenhang mit Fig. 2 beschrieben, mit dem Werkzeughalter 1 verbunden. Das Lösen des Nadelkopfs 120 vom Werkzeughalter 1 erfolgt wiederum mittels des im Werkzeughalter 1 angeordneten, nicht sichtbaren Elektromagnets.

Mit einem derartigen Nadelkopf 120 kann beispielsweise gleichzeitig mehreren Reaktionsgefässen Flüssigkeit zudosiert bzw. aus ihnen entnommen werden. Insbesondere können hierzu am oberen Ende der Hohlnadeln 125 Saug- und/oder Blaseinrichtungen angeschlossen werden.

Im Vergleich zu Fig. 1 ist unterhalb des Drehantriebs 2 am Werkzeughalter 1 zusätzlich eine Waage 9 angeordnet, mit welcher das Gesamtgewicht des Werkzeughalters 1, des Nadelkopfs 120 und der in den Hohlnadeln 125 vorhandenen Substanzen messbar ist. Zieht man von diesem Gesamtgewicht das Gewicht des Werkzeughalters 1 und des Nadelkopfs 120 ab, erhält man das Gewicht der in den Hohlnadeln 125 vorhandenen Substanzen. Durch Differenzmessungen kann das Gewicht aufgenommener oder abgegebener Substanzen bestimmt werden.

### Figuren 5 bis 7

Das Werkzeug ist hier durch einen Kapseltransportkopf 140 gebildet, mit welchem eine röhrchenförmige, dicht verschlossene Kapsel 150, die eine pulverförmige Substanz 151 enthält, durch Ansaugen aufnehmbar ist. Der Kapseltransportkopf 140 umfasst einen Permanentmagnet 141, über den er, wie entsprechend im Zusammenhang mit Fig. 2 beschrieben, mit dem Werkzeughalter 1 verbunden ist. Das Lösen erfolgt mittels des im Werkzeughalter 1 angeordneten Elektromagnets. Am Permanentmagnet 141 ist über eine Waage 145 und ein Zwischenteil 142 ein Saugrohr 143 mit einem Kapselhalteendstück 144 angebracht. Mittels einer nicht dargestellten, herkömmlichen Saugeinrichtung kann im Saugrohr 143 ein Unterdruck erzeugt werden.

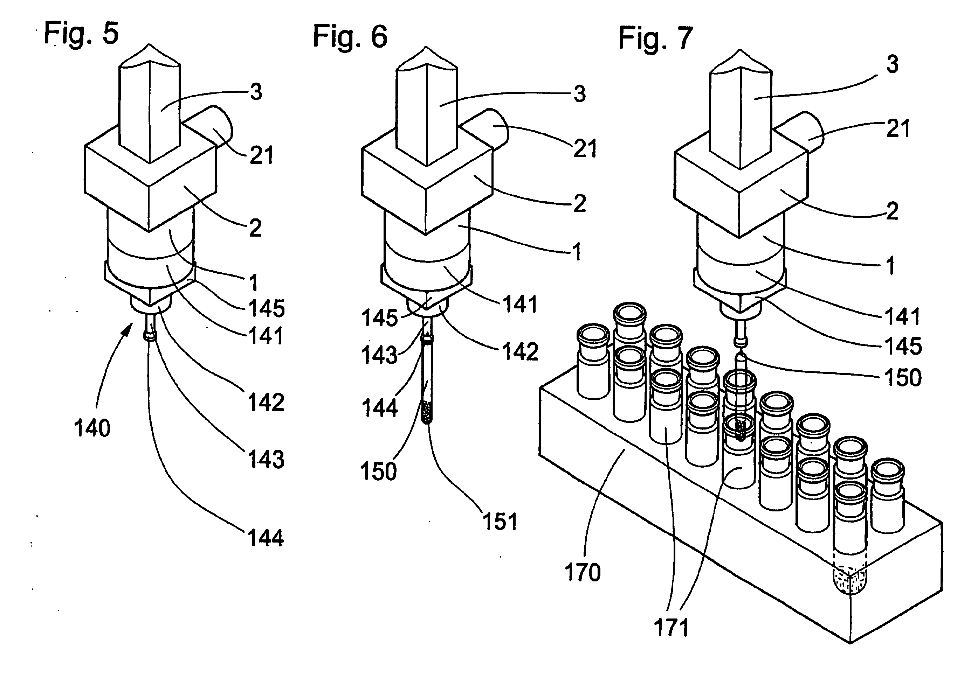

Zur Aufnahme einer Kapsel 150 wird der Kapseltransportkopf 140 mit dem Kapselhalteendstück 144 über das obere Ende der Kapsel 150 gefahren und dann die Kapsel 150 durch Erzeugen eines Unterdrucks im Saugrohr 143, wie in Fig. 6 dargestellt, ergriffen. Danach wird die Kapsel 150 durch das Linearachsensystem zum Bestimmungsort transportiert, in Fig. 7 einem in einer Matrize 170 angeordneten Reaktionsgefäss 171, und dort durch Aufheben des Unterdrucks im Saugrohr 143 in das Reaktionsgefäss 171 abgegeben.

Mit der Waage 145 ist das Gesamtgewicht des Zwischenteils 142, des Saugrohrs 143 mit dem Kapselhalteendstück 144 und der damit aufgenommenen, mit Substanz 151 gefüllten Kapsel 150 messbar. Zieht man von diesem Gesamtgewicht das Gewicht des Zwischenteils 142 und des Saugrohrs 143 mit dem Kapselhalteendstück 144 ab, erhält man das Gewicht der mit Substanz 151 gefüllten Kapsel 150. Durch Differenzmessungen mit einer leeren Kapsel 150 kann das Gewicht der Substanz 151 in der Kapsel 150 bestimmt werden.

### Figur 8

Das Werkzeug ist hier durch einen Matrizenkapseltransportkopf 160 gebildet, der einen Permanentmagnet 161 umfasst, über den er, wie entsprechend im Zusammenhang mit Fig. 2 beschrieben, mit dem Werkzeughalter 1 verbunden ist. Das Lösen erfolgt mittels des im Werkzeughalter 1 angeordneten Elektromagnets. Am Permanentmagnet 161 sind über eine Waage 165 und eine Saugrohrplatte 162 sechzehn matrizenartig angeordnete Saugrohre 163 mit jeweils einem Kapselhalteendstück 164 angebracht. Mittels einer nicht dargestellten, herkömmlichen Saugeinrichtung kann in den Saugrohren 163 über die Saugrohrplatte 162 ein Unterdruck erzeugt werden.

Zur Aufnahme von Kapseln 150 wird der Matrizenkapseltransportkopf 160 mit den Kapselhalteendstücken 164 über die oberen Enden der Kapseln 150 gefahren und dann werden die Kapseln 150 durch Erzeugen eines Unterdrucks in den Saugrohren 163 ergriffen. Danach werden die Kapseln 150 durch das Linearachsensystem zum Bestimmungsort transportiert, hier in einer Matrize 170 angeordnete Reaktionsgefässe 171, und dort durch Aufheben des Unterdrucks in den Saugrohren 163 in die Reaktionsgefässe 171 abgegeben.

Mit der Waage 165 ist das Gesamtgewicht der Saugrohrplatte 162, der Saugrohre 163 mit den Kapselhalteendstücken 164 und der damit aufgenommenen, mit Substanzen gefüllten Kapseln 150 messbar. Zieht man von diesem Gesamtgewicht das Gewicht der Saugrohrplatte 162 und der Saugrohre 163 mit den Kapselhalteendstücken 164 ab, erhält man das Gewicht der mit Substanzen gefüllten Kapseln 150. Durch Differenzmessungen mit leeren Kapseln 150 kann das Gewicht der Substanzen in den Kapseln 150 bestimmt werden.

### Figuren 9 bis 12

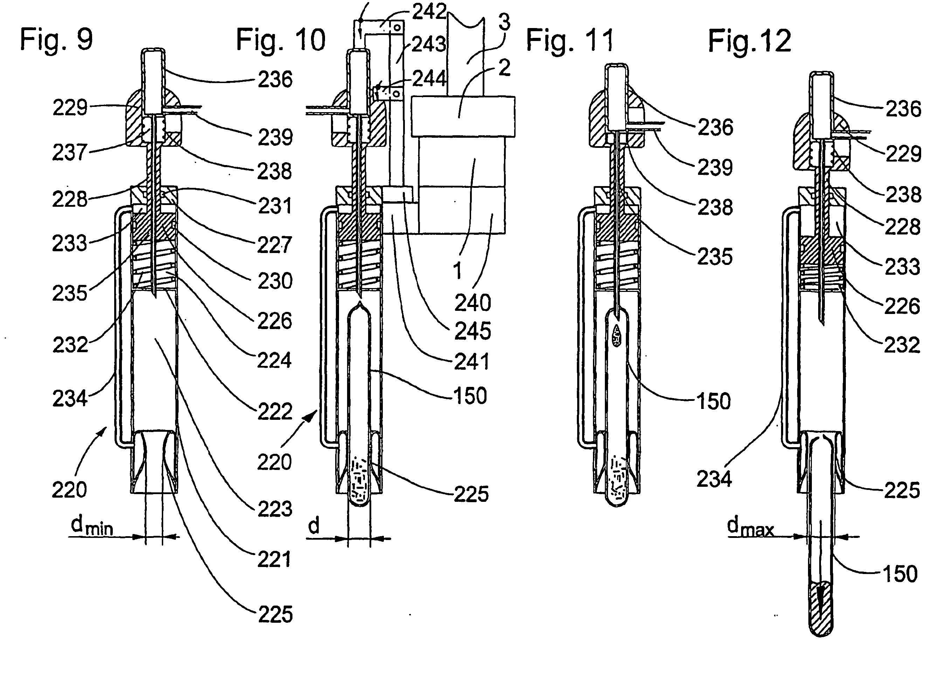

Das Werkzeug ist hier durch einen Kapselhandlingkopf 220 gebildet, der ein zylindrisches Gehäuse 221 umfasst, das durch eine Trennwand 222 in zwei Kompartimente 223 und 224 unterteilt und oben durch eine Endwand 227 verschlossen ist. Am offenen Ende des unteren Kompartiments 223 ist im zylindrischen Gehäuse 221 eine mit Luft gefüllte Manschette 225, beispielsweise aus Gummi, angeordnet, die im entlasteten Zustand gemäss Fig. 9 einen Innendurchmesser dₘᵢₙ aufweist. Im oberen Kompartiment 224 befindet sich ein Kolben 226, an welchem eine Kolbenstange 228 ansetzt, die durch die Endwand 227 hindurch nach aussen ragt und an ihrem oberen Ende mit einem äusseren Druckknopf 229 versehen ist. Zwischen dem Kolben 226 und dem zylindrischen Gehäuse 221 und zwischen der Kolbenstange 228 und der Endwand 227 ist jeweils eine Ringdichtung 230, 231 angeordnet. Zwischen dem Kolben 226 und der Trennwand 222 befindet sich eine Spiralfeder 232, die in entspanntem Zustand den Kolben 226 in der Stellung gemäss Fig. 9 hält. Zwischen dem Kolben 226 und der Endwand 227 ist ein luftgefüllter Raum 233 vorhanden, der über eine Luftleitung 234 mit dem Innern der Manschette 225 kommuniziert.

Der Kapselhandlingkopf 220 umfasst ausserdem eine Hohlnadel 235, an der ein innerer Druckknopf 236 angebracht ist. Der innere Druckknopf 236 ist in einer Ausnehmung 237 im äusseren Druckknopf 229 verschiebbar gelagert, wobei in der Ausnehmung 237 unterhalb des inneren Druckknopfs 236 eine Spiralfeder 238 angeordnet ist, die in entspanntem Zustand den inneren Druckknopf 236 und die Hohlnadel 235 in der Stellung gemäss Fig. 9 hält. Die Hohlnadel 235 durchquert die Kolbenstange 228, den Kolben 226 und die Trennwand 222. Sie kommuniziert mit dem innen hohlen inneren Druckknopf 236, der über eine Zuleitung 239 beispielsweise mit einem Lösungsmittel oder einer anderen Flüssigkeit alimentierbar ist.

Fig. 10 zeigt den Kapselhandlingkopf 220 nach dem Aufnehmen einer Kapsel 150, welches durch Draufsetzen des Kapselhandlingkopfs 220 auf die Kapsel 150 erfolgen kann. Die Kapsel 150 wird durch die Manschette 225 gehalten, die jetzt einen Innendurchmesser d aufweist, der dem Aussendurchmesser der Kapsel 150 entspricht und der grösser ist als der Innendurchmesser dₘᵢₙ in entspanntem Zustand.

In Fig. 10 ist auch dargestellt, dass der Kapselhandlingkopf 220 eine Waage 241 und einen Permanentmagnet 240 umfasst, über den er, wie entsprechend im Zusammenhang mit Fig. 2 beschrieben, mit dem Werkzeughalter 1 verbunden ist. Das Lösen des Kapselhandlingkopfs 220 vom Werkzeughalter 1 erfolgt mittels des im Werkzeughalter 1 angeordneten Elektromagnets. Ausserdem ist schematisch angedeutet, dass der innere Druckknopf 236 durch einen Drehhebel 242 und der äussere Druckknopf 229 durch einen Drehhebel 244 betätigbar sind, wobei die beiden Drehhebel 242, 244 an einer über ein Lagerteil 245 an der Waage 241 befestigten Stange 243 in Pfeilrichtung drehbar angelenkt sind. Die Antriebe der beiden Drehhebel 242, 244, die vom Steuercomputer gesteuert sind, sind nicht dargestellt. In den Fig. 9, 11 und 12 sind der Permanentmagnet 240, die Waage 241, die beiden Drehhebel 242, 244, die Stange 243, das Lagerteil 245 und der Werkzeughalter 1 aus Übersichtlichkeitsgründen nicht gezeichnet.

Mit der Waage 241 ist das Gesamtgewicht der mit dem Kapselhandlingkopf 220 aufgenommenen, mit Substanz gefüllten Kapsel 150 und des Kapselhandlingkopfs 220 mit Ausnahme des Permanentmagnets 240 und der Waage 241 selbst messbar. Zieht man von diesem Gesamtgewicht das Gewicht des Kapselhandlingkopfs 220 mit Ausnahme des Permanentmagnets 240 und der Waage 241 ab, erhält man das Gewicht der mit Substanz gefüllten Kapsel 150. Durch Differenzmessungen mit einer leeren Kapsel 150 kann das Gewicht der Substanz in der Kapsel 150 bestimmt werden.

Durch Hinunterdrücken des inneren Druckknopfs 236 wird die Spiralfeder 238 komprimiert und die Hohlnadel 235 in die Kapsel 150 gedrückt, wie in Fig. 11 dargestellt. Die Kapsel 150 wird dadurch geöffnet und es kann ihr über die Hohlnadel 235 eine Substanz aus dem inneren Druckknopf 236, der über die Zuleitung 239 alimentiert wird, zugeführt werden. Alternativ könnte die Zuleitung 239 auch direkt mit der Hohlnadel 235 verbunden sein. Die zugeführte Substanz, insbesondere ein Lösungsmittel, kann beispielsweise durch Schütteln des Kapselhandlingkopfs 220 mit der bereits in der Kapsel 150 vorhandenen Substanz gemischt werden. Bei Verwendung einer genügend langen Hohlnadel könnte das Mischen auch durch mehrmaliges Aufsaugen und wieder Ablassen der in der Kapsel 150 vorhandenen Substanzen erfolgen.

Wird auf den inneren Druckknopf 236 kein Druck mehr ausgeübt, drückt ihn die Spiralfeder 238 wieder nach oben in die Ausgangsposition.

Zum Freigeben der Kapsel 150 wird, wie in Fig. 12 dargestellt, der äussere Druckknopf 229 nach unten gedrückt. Dabei werden die Kolbenstange 228 und der Kolben 226 unter Kompression der Spiralfeder 232 nach unten bewegt, wodurch der Raum 233 zwischen dem Kolben 226 und der Endwand 227 stark vergrössert wird und in ihm ein Unterdruck erzeugt wird. Dieser Unterdruck bewirkt, dass dem Innern der Manschette 225 über die Luftleitung 234 Luft entzogen wird, wodurch der Innendurchmesser der Manschette 225 auf einen maximalen Wert dₘₐₓ vergrössert wird, der grösser ist als der Aussendurchmesser der Kapsel 150, so dass die Kapsel 150 von der Manschette 225 nicht mehr gehalten wird und aufgrund der Schwerkraft nach unten fällt.

Wird auf den äusseren Druckknopf 229 kein Druck mehr ausgeübt, drückt ihn die Spiralfeder 232 wieder nach oben in die Ausgangsposition gemäss Fig. 9.

### Figur 13

Das Werkzeug ist hier durch einen Matrizenkapselhandlingkopf 250 gebildet, der eine Halteplatte 255 umfasst, die in nicht dargestellter Weise über einen Permanentmagnet mit dem Werkzeughalter 1 abnehmbar verbunden ist. Das Lösen des Matrizenkapselhandlingkopfs 250 vom Werkzeughalter 1 erfolgt mittels des im Werkzeughalter 1 angeordneten Elektromagnets, von dem die Stromleitung 8 sichtbar ist. Von zwei sich diagonal gegenüberliegenden Eckbereichen der Halteplatte 255 erstrecken sich zwei Stangen 252, 253, die fest mit der Halteplatte 255 verbunden sind, in z-Richtung, d.h. vertikal, nach oben. Oberhalb der Halteplatte 255 ist eine in z-Richtung verstellbare Freigabeplatte 254 angeordnet, die in zwei sich diagonal gegenüberliegenden Eckbereichen durch die Stangen 252, 253 geführt ist. Ebenfalls in z-Richtung verstellbar und durch die zwei Stangen 252, 253 geführt ist eine oberhalb der Freigabeplatte 254 befindliche Auslöseplatte 251. Die vertikale Verstellung der Freigabeplatte 254 und der Auslöseplatte 251 erfolgt durch zwei nicht dargestellte Motoren, könnte aber prinzipiell auch von Hand vorgenommen werden.

In der Halteplatte 255 sind sechzehn Kapselhandlingelemente 256 befestigt. Die hier nur schematisch dargestellten Kapselhandlingelemente 256 sind bis auf das Verbindungsteil 241 und den Permanentmagnet 240 im wesentlichen entsprechend den Kapselhandlingköpfen 220 der Fig. 9 bis 12 aufgebaut und umfassen jeweils neben einem zylindrischen Gehäuse 221 einen äusseren Druckknopf 229 und einen inneren Druckknopf 236. Die inneren Druckknöpfe 236 mit den daran angebrachten Hohlnadeln sind durch Absenken der Auslöseplatte 251 gemeinsam betätigbar. Die gemeinsame Betätigung der äusseren Druckknöpfe 229 erfolgt durch Absenken der Freigabeplatte 254. Mit dem Matrizenkapselhandlingkopf 250 können sechzehn in einer Matrize 149 angeordnete Kapseln 150 gemeinsam gefasst, jeweils mit einer Hohlnadel 235 geöffnet, eventuell die darin enthaltenen Substanzen mit anderen Substanzen gemischt und wieder freigegeben werden.

Im Vergleich zu Fig. 1 ist unterhalb des Drehantriebs 2 am Werkzeughalter 1 zusätzlich eine Waage 9 angeordnet, mit welcher das Gesamtgewicht des Werkzeughalters 1, des Matrizenkapselhandlingkopfs 250 und der damit aufgenommenen, mit Substanzen gefüllten Kapseln 150 messbar ist. Zieht man von diesem Gesamtgewicht das Gewicht des Werkzeughalters 1 und des Matrizenkapselhandlingkopfs 250 ab, erhält man das Gewicht der mit Substanzen gefüllten Kapseln 150. Durch Differenzmessungen mit leeren Kapseln 150 kann das Gewicht der Substanzen in den Kapseln 150 bestimmt werden.

### Figur 14

Das Werkzeug ist hier ein erstes Ausführungsbeispiel eines Kapselabgabekopfs 280, der eine Waage 296 und einen Permanentmagnet 295 umfasst, über den er, wie entsprechend im Zusammenhang mit Fig. 2 beschrieben, mit dem Werkzeughalter 1 verbunden ist. Das Lösen des Kapselabgabekopfs 280 vom Werkzeughalter 1 erfolgt mittels des im Werkzeughalter 1 angeordneten Elektromagnets.

Der Kapselabgabekopf 280 umfasst ein im wesentlichen zylindrisches Gehäuse 281, das sich in seinem unteren Teil zu einem Hals 282 verengt und in dem eine Vielzahl von jeweils eine Substanz 151 enthaltenden Kapseln 150 gespeichert sind. Eine der Kapseln 150 wird von einer im Hals 282 angeordneten, mit Luft gefüllten Manschette 283, beispielsweise aus Gummi, gehalten. In einem separaten Zylinder 284 befindet sich ein Kolben 285, an welchem eine Kolbenstange 286 ansetzt, die durch eine Endwand 287 des Zylinders 284 hindurch nach aussen ragt und an ihrem oberen Ende mit einem Druckknopf 288 versehen ist. Zwischen dem Kolben 285 und dem Zylinder 284 und zwischen der Kolbenstange 286 und der Endwand 287 ist jeweils eine Ringdichtung 289, 290 angeordnet. Zwischen dem Kolben 285 und dem Boden 291 des Zylinders 284 befindet sich eine Spiralfeder 292, die in entspanntem Zustand den Kolben 285 in der dargestellten Stellung hält. Zwischen dem Kolben 285 und der Endwand 287 ist ein luftgefüllter Raum 293 vorhanden, der über eine Luftleitung 294 mit dem Innern der Manschette 283 kommuniziert.

Zum Freigeben der von der Manschette 283 gehaltenen Kapsel 150 wird der Druckknopf 288 nach unten gedrückt. Dabei werden die Kolbenstange 286 und der Kolben 285 unter Kompression der Spiralfeder 292 nach unten bewegt, wodurch der Raum 293 zwischen dem Kolben 285 und der Endwand 287 stark vergrössert wird und in ihm ein Unterdruck erzeugt wird. Dieser Unterdruck bewirkt, dass dem Innern der Manschette 283 über die Luftleitung 294 Luft entzogen wird, wodurch der Innendurchmesser der Manschette 283 auf einen Wert vergrössert wird, der grösser ist als der Aussendurchmesser der Kapsel 150, so dass die Kapsel 150 von der Manschette 283 nicht mehr gehalten wird und aufgrund der Schwerkraft nach unten fällt. Gleichzeitig rückt eine zweite Kapsel 150 an die Stelle der ersten Kapsel 150 nach, wobei wichtig ist, dass der Druck auf den Druckknopf 288 rasch genug wieder gelöst wird, so dass zur Greifung der Kapsel 150 durch die Manschette 283 ausreichend schnell die Spiralfeder 292 den Kolben 285 wieder nach oben in die Ausgangsposition bewegt, der Raum 293 wieder verkleinert wird und der Manschette 283 über die Luftleitung 294 wieder Luft zugeführt wird.

Es ist ausserdem schematisch angedeutet, dass der Druckknopf 288 durch einen Drehhebel 297 betätigbar ist, wobei der Drehhebel 297 an einer Stange 298 in Pfeilrichtung drehbar angelenkt ist, die ihrerseits über ein Lagerteil 299 an der Waage 296 befestigt ist. Der Antrieb des Drehhebels 297, der vom Steuercomputer gesteuert ist, ist nicht dargestellt.

Mit der Waage 296 ist das Gesamtgewicht der im Kapselabgabekopf 280 vorhandenen, mit Substanzen gefüllten Kapseln 150 und des Kapselabgabekopfs 280 mit Ausnahme des Permanentmagnets 295 und der Waage 296 selbst messbar. Durch Messen der Gewichtsdifferenz vor und nach der Abgabe einer Kapsel 150 kann das Gewicht einer mit Substanz gefüllten Kapsel 150 gemessen werden. Durch Differenzmessungen mit einer leeren Kapsel 150 kann das Gewicht der Substanz in der Kapsel 150 bestimmt werden.

### Figur 15

Das Werkzeug ist hier ein zweites Ausführungsbeispiel eines Kapselabgabekopfs 300, der eine Waage 318 und einen Permanentmagnet 317 umfasst, über den er, wie entsprechend im Zusammenhang mit Fig. 2 beschrieben, mit dem Werkzeughalter 1 verbunden ist. Das Lösen des Kapselabgabekopfs 300 vom Werkzeughalter 1 erfolgt mittels des im Werkzeughalter 1 angeordneten Elektromagnets.

Der Kapselabgabekopf 300 umfasst ein im wesentlichen zylindrisches Gehäuse 301, das sich in seinem unteren Teil zu einem Hals 302 verengt und in dem eine Vielzahl von jeweils eine Substanz 151 enthaltenden Kapseln 150 gespeichert sind. Eine der Kapseln 150 wird von einer im Hals 302 angeordneten, mit Luft gefüllten Manschette 303, beispielsweise aus Gummi, gehalten, während die anderen Kapseln 150 im zylindrischen Gehäuse 301 in einem gemäss Pfeil E revolverartig drehbaren Kammernteil 315 angeordnet sind. In einem separaten Zylinder 304 befindet sich ein Kolben 305, an welchem eine Kolbenstange 306 ansetzt, die durch eine Endwand 307 des Zylinders 304 hindurch nach aussen ragt und an ihrem oberen Ende mit einem Druckknopf 308 versehen ist. Zwischen dem Kolben 305 und dem Zylinder 304 und zwischen der Kolbenstange 306 und der Endwand 307 ist jeweils eine Ringdichtung 309, 310 angeordnet. Zwischen dem Kolben 305 und dem Boden 311 des Zylinders 304 befindet sich eine Spiralfeder 312, die in entspanntem Zustand den Kolben 305 in der dargestellten Stellung hält. Zwischen dem Kolben 305 und der Endwand 307 ist ein luftgefüllter Raum 313 vorhanden, der über eine Luftleitung 314 mit dem Innern der Manschette 303 kommuniziert.

Der Kapselabgabekopf 300 umfasst ausserdem eine Hohlnadel 316, die den Druckknopf 308, die Kolbenstange 306, den Kolben 305 und den Boden 311 durchquert. Durch Herunterdrücken der Hohlnadel 316 kann die Kapsel 150, die sich oberhalb derjenigen befindet, die von der Manschette 303 gehalten ist, aufgestochen werden. Über die Hohlnadel 316 kann der geöffneten Kapsel 150 bei Bedarf eine andere Substanz, insbesondere ein Lösungsmittel, zugeführt werden.

Zum Freigeben der von der Manschette 303 gehaltenen Kapsel 150 wird der Druckknopf 308 nach unten gedrückt. Dabei werden die Kolbenstange 306 und der Kolben 305 unter Kompression der Spiralfeder 312 nach unten bewegt, wodurch der Raum 313 zwischen dem Kolben 305 und der Endwand 307 stark vergrössert wird und in ihm ein Unterdruck erzeugt wird. Dieser Unterdruck bewirkt, dass dem Innern der Manschette 303 über die Luftleitung 314 Luft entzogen wird, wodurch der Innendurchmesser der Manschette 303 auf einen Wert vergrössert wird, der grösser ist als der Aussendurchmesser der Kapsel 150, so dass die Kapsel 150 von der Manschette 303 nicht mehr gehalten wird und aufgrund der Schwerkraft nach unten fällt. Gleichzeitig fällt die oberhalb dieser Kapsel 150 sich befindende Kapsel an die Stelle der freigegebenen Kapsel 150, wobei wichtig ist, dass der Druck auf den Druckknopf 308 rasch genug wieder gelöst wird, so dass zur Greifung der nachgerückten Kapsel 150 durch die Manschette 303 ausreichend schnell die Spiralfeder 312 den Kolben 305 wieder nach oben in die Ausgangsposition bewegt, der Raum 313 wieder verkleinert wird und der Manschette 303 über die Luftleitung 314 wieder Luft zugeführt wird. Danach wird das Kammernteil 315 einen Schritt weitergedreht, so dass eine neue Kapsel 150 in die Position direkt oberhalb des Halses 302 nachrückt. Das Drehen des Kammernteils 315 kann beispielsweise von Hand von aussen her erfolgen oder es kann durch die Betätigung des Druckknopfs 308 ausgelöst werden. Das zylindrische Gehäuse 301 weist zu diesem Zweck nötigenfalls Zugriffsöffnungen auf.

Es ist ausserdem schematisch angedeutet, dass die Hohlnadel 316 durch einen Drehhebel 319 und der Druckknopf 308 durch einen Drehhebel 322 betätigbar sind, wobei die beiden Drehhebel 319, 322 an einer über ein Lagerteil 323 an der Waage 318 befestigten Stange 321 in Pfeilrichtung drehbar angelenkt sind. Die Antriebe der beiden Drehhebel 319, 322, die vom Steuercomputer gesteuert sind, sind nicht dargestellt.

Anstelle des zylindrischen Gehäuses 301 und des revolverartig drehbaren Kammernteils 315 kann auch ein quaderförmiges Gehäuse vorgesehen sein, in dem die Kapseln 150 in einer in x- und y-Richtung verschiebbaren Platte angeordnet sind.

Mit der Waage 318 ist das Gesamtgewicht der im Kapselabgabekopf 300 vorhandenen, mit Substanzen gefüllten Kapseln 150 und des Kapselabgabekopfs 300 mit Ausnahme des Permanentmagnets 317 und der Waage 318 selbst messbar. Durch Messen der Gewichtsdifferenz vor und nach der Abgabe einer Kapsel 150 kann das Gewicht einer mit Substanz gefüllten Kapsel 150 gemessen werden. Durch Differenzmessungen mit einer leeren Kapsel 150 kann das Gewicht der Substanz in der Kapsel 150 bestimmt werden.

### Figuren 16 und 17

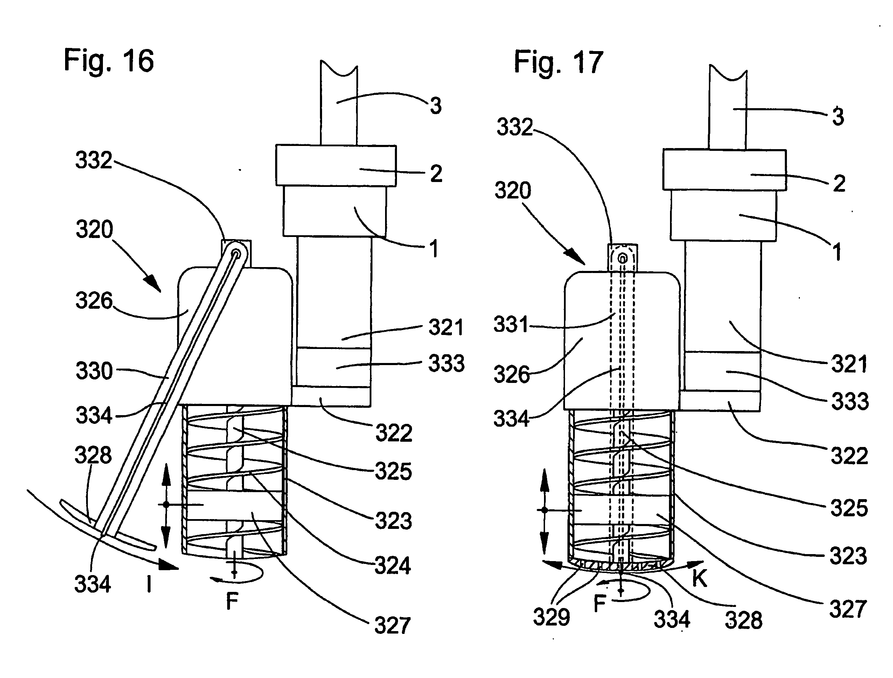

Die in den Figuren 16 und 17 dargestellte Vorrichtung ist nicht Bestandteil der vorliegenden Erfindung.

Das Werkzeug ist hier durch einen Schneckendosierkopf 320 gebildet, der einen Permanentmagnet 321 umfasst, über den er, wie entsprechend im Zusammenhang mit Fig. 2 beschrieben, mit dem Werkzeughalter 1 verbunden ist. Das Lösen des Schneckendosierkopfs 320 vom Werkzeughalter 1 erfolgt mittels des im Werkzeughalter 1 angeordneten Elektromagnets.

Am Permanentmagnet 321 ist über eine Waage 333 und ein Verbindungsteil 322 ein Motorenteil 326 angebracht, an dessem unteren Ende ein offenes Rohr 323 befestigt ist, in dem eine gemäss Pfeil F um die z-Richtung vorwärts und rückwärts drehbare Schnecke 324 mit Schneckenwelle 325 gelagert ist. Die Schnecke 324 ist über die Schneckenwelle 325 durch einen im Motorenteil 326 angeordneten Motor drehbar und in z-Richtung stabil verankert. Durch Drehen der Schnecke 324 wird ein auf dieser laufender Stempel 327 hinauf- oder herabbewegt. Das untere, offene Ende des Rohrs 323 ist mit einer mit Löchern 329 versehenen Blende 328 verschliessbar, die an zwei Schwenkarmen 330, 331 befestigt ist, welche an einer Aufhängung 332 am Motorenteil 326 schwenkbar montiert sind. In Fig. 16 ist die Blende 328 vom offenen Ende des Rohrs 323 entfernt und kann durch ein Schwenken in Richtung des Pfeils I in die in Fig. 17 dargestellte Schliessposition gebracht werden.

Zur Aufnahme von Substanz wird das offene Ende des Rohrs 323 bei weggeschwenkter Blende 328 auf die Substanz gesetzt. Durch Drehen der Schnecke 324 in die den Stempel 327 hinaufbewegende Richtung wird Substanz direkt von der Schnecke 324 nach oben mitgenommen.

Zum Abgeben von Substanz wird die Blende 328 unter die Schnecke 324 vor das offene Ende des Rohrs 323 geschwenkt. Danach wird die Schnecke 324 in die den Stempel 327 herabbewegende Richtung gedreht, wodurch Substanz einerseits direkt durch die Schnecke 324 und anderseits durch den Stempel 327 nach unten durch die Löcher 329 der Blende 328 hindurch nach aussen gedrückt wird. Ein Abstreifer 334 in Form eines u-förmigen Drahtes, von dem ein Teil an der Unterseite der Blende 328 anliegt, ist wie die zwei Schwenkarme 330, 331 an der Aufhängung 332 schwenkbar montiert. Durch Schwenken des Abstreifers 334 in Richtung des Pfeils K wird sichergestellt, dass unten an der Blende 328 allenfalls hängenbleibende Substanz periodisch abgestreift wird, was eine genauere Dosierung ermöglicht.

Die Blende 328 sorgt für eine kontinuierlichere Förderung von Substanz, prinzipiell ist eine Dosierung aber auch ohne Blende 328 möglich.

Mit der Waage 333 ist das Gesamtgewicht der von der Schnecke 324 aufgenommenen Substanz und des Schneckendosierkopfs 320 mit Ausnahme des Permanentmagnets 321 und der Waage 333 selbst messbar. Zieht man von diesem Gesamtgewicht das Gewicht des Schneckendosierkopfs 320 mit Ausnahme des Permanentmagnets 321 und der Waage 333 selbst ab, erhält man das Gewicht der aufgenommenen Substanz. Durch Differenzmessungen kann das Gewicht zusätzlich aufgenommener oder abgegebener Substanz bestimmt werden.

### Figur 18

Das Werkzeug ist hier durch einen Feststoffdosierkopf 350 gebildet, der einen Permanentmagnet 351 umfasst, über den er, wie entsprechend im Zusammenhang mit Fig. 2 beschrieben, mit dem Werkzeughalter 1 verbunden ist. Das Lösen des Feststoffdosierkopfs 350 vom Werkzeughalter 1 erfolgt mittels des im Werkzeughalter 1 angeordneten Elektromagnets.

Am Permanentmagnet 351 ist ein Lagerteil 352 angebracht, an dem ein Wagen 353 in z-Richtung verschiebbar gelagert ist. Seitlich in den Wagen 353 eingeschoben ist eine Halteplatte 354, an der ein Dosiergehäuse 355 befestigt ist, dessen Innendurchmesser nach unten abgestuft abnimmt und das einen Zwischenboden 371 mit einer konischen Dosieröffnung aufweist, die sich nach oben verjüngt. Die Halteplatte 354 mit dem Dosiergehäuse 355 kann durch eine Horizontalbewegung mit geringer Kraft vom Wagen 353 gelöst werden.

Mitten durch das Dosiergehäuse 355 und die konische Dosieröffnung im Zwischenboden 371 verläuft in z-Richtung eine rotierende Dosierwelle 357, die einen Abstreifer 356 antreibt und in z-Richtung verstellbar ist. Am unteren Ende der Dosierwelle 357 ist ein sich nach oben verjüngender Schliesskonus 372 angebracht, der die konische Dosieröffnung im Zwischenboden 371 je nach z-Position teilweise oder ganz verschliesst, wobei bei teilweise offener Dosieröffnung nach unten fliessende Substanz dem Abstreifer 356 zugeführt wird.

Die rotierende Dosierwelle 357 ist fest mit einem mitrotierenden Lagerteil 368 verbunden, ragt von unten in eine von einem Motor 360 angetriebene Welle 359 hinein und wird von dieser mitrotiert. Ein rotierender Abstreifer 358, der im oberen Teil des Dosiergehäuses 355 angeordnet ist, verläuft durch das Lagerteil 368 hindurch und ragt ebenfalls von unten in die Welle 359 hinein. Der Abstreifer 358 ist im Lagerteil 368 in z-Richtung beweglich und wird zusammen mit der Dosierwelle 357 von der Welle 359 angetrieben.

Die Verstellung der Dosierwelle 357 in z-Richtung wird durch zwei Elektromagnete 362 und 363 bewirkt, die auf der Halteplatte 354 montiert sind und über zwei Supportteile 364, 365 eine Deckplatte 366 tragen. Die Deckplatte 366 ist mit dem Lagerteil 368 in z-Richtung fest verbunden, wobei ein Kugellager 361 ermöglicht, dass das Lagerteil 368 an der drehfesten Deckplatte 366 rotiert. Die Elektromagnete 362, 363 erzeugen bei Aktivierung eine Kraft in z-Richtung und Heben oder Senken die Deckplatte 366 und in der Folge das Lagerteil 368 und die Dosierwelle 357.

Die Steuerung des Motors 360 und der Elektromagnete 362, 363 erfolgt durch ein Steuerungsteil 367, das seitlich am Lagerteil 352 angebracht ist und an dem der Motor 360 befestigt ist.

Ausserdem ist am Lagerteil 352 eine Waage 369 mit im Minimum einem Wägebereich von 0 bis 2 kg und einer Genauigkeit von 0,1 g angebracht, die über einen Stift 370 mit dem Wagen 353 in Kontakt steht. Solche Waagen sind beispielsweise bei der Firma Sartorius AG, 37070 Göttingen, Deutschland, erhältlich. Vorzugsweise wird jedoch eine genauere Waage mit einer Genauigkeit von 0,1 mg verwendet.

Wird im Dosiergehäuse 355 gespeicherte Substanz über die konische Dosieröffnung im Zwischenboden 371 abgegeben, wird das auf den Wagen 353 lastende Gewicht verkleinert und der Wagen 353 weniger stark nach unten gezogen, was durch die Waage 369 über den Stift 370 gemessen wird.

Eine zweite Waage 374 ist mittels eines Verbindungsteils 373 am Steuerungsteil 367 befestigt. Die Waage 374 trägt über eine sich in z-Richtung erstreckende Drehachse 376 einen kippbaren Löffel 375, dessen Schale sich senkrecht unterhalb des Dosiergehäuses 355 befindet.

Vom Dosiergehäuse 355 abgegebene Substanz fällt zunächst in die Schale des Löffels 375, so dass deren Gewicht dort mittels der Waage 374 gemessen werden kann. Entspricht das gemessene Gewicht einer Substanzmenge, die beispielsweise einem Reaktionsgefäss zudosiert werden soll, wird die Substanz durch Kippen des Löffels 375 gemäss Pfeil G um 180° dem Reaktionsgefäss zugegeben. Entspricht das gemessene Gewicht einer kleineren als der gewünschten Substanzmenge, wird entweder zunächst die vorhandene Substanzmenge durch Kippen des Löffels 375 dem Reaktionsgefäss zugegeben, dann der Löffel 375 wieder in die Aufnahmeposition zurückgedreht und die noch fehlende Differenzmenge in einem zweiten Schritt abgewogen und schliesslich wiederum durch Kippen des Löffels 375 dem Reaktionsgefäss zugegeben oder es wird als Alternative der Schale des Löffels 375 direkt noch mehr Substanz zugeführt, bis die gewünschte Menge erreicht wird. Entspricht das gemessene Gewicht hingegen einer grösseren als der gewünschten Substanzmenge, wird entweder die Schale durch Drehen der Drehachse 376 und somit des daran befestigten Löffels 375 gemäss Pfeil H weggedreht, entleert, wieder unter das Dosiergehäuse 355 gedreht und wieder mit Substanz gefüllt oder es wird als Alternative der ganze Feststoffdosierkopf 350 über den Werkzeughalter 1 deplaziert, die Schale entleert, durch Verstellen des Feststoffdosierkopfs 350 wieder unter das Dosiergehäuse 355 geführt und wieder mit Substanz gefüllt.

Die Waagen 369 und 374 können entweder jeweils für sich alleine oder zur gegenseitigen Kontrolle gemeinsam verwendet werden, wobei die Waage 374 den Vorteil hat, dass sie ein kleineres Gesamtgewicht misst. Prinzipiell wäre es aber auch möglich, die Drehachse 376 direkt am Verbindungsteil 373 zu lagern und sie zusammen mit dem Löffel 375 aufgrund der Messresultate der Waage 369 alleine zu steuern.

Als Alternative zum Löffel 375 ist beispielsweise auch ein Behälter, z.B. ein Trichter, denkbar, der unten eine verschliessbare Öffnung aufweist.

Ein Feststoffdosierkopf dieser Art, aber ohne Magnetkupplung zum Werkzeughalter 1, ohne Löffel 375 und ohne direkt am Feststoffdosierkopf angeordneten Waagen 369 und 374 wird von der Firma Auto Dose SA, CH-1228 Plan-les-Ouates, vertrieben:

### Figuren 19 bis 23

Bei diesem Ausführungsbeispiel ist das Werkzeug durch einen Schneckendosierkopf 420 gebildet, der über eine Bajonettverschlussverbindung mit einem am Drehantrieb 2 befestigten Werkzeughalter 401 verbindbar ist. Die Bajonettverschlussverbindung umfasst werkzeughalterseitig ein ringförmiges Verbindungsteil 411 mit einem Verbindungsbolzen 412 und werkzeugseitig ein ringförmiges Verbindungsteil 421 mit einer Ausnehmung 422 zur Aufnahme des Verbindungsbolzens 412. Ausserdem ist werkzeugseitig ein Dorn 424 angeordnet, der zum Eingriff in das ringförmige Verbindungsteil 411 bestimmt ist und die Bajonettverschlussverbindung stabilisiert.

Über acht über den Aussenumfang verteilte Kontaktstellen 413 am werkzeughalterseitigen ringförmigen Verbindungsteil 411 und acht entsprechend über den Innenumfang verteilte Kontaktstellen 423 am werkzeugseitigen ringförmigen Verbindungsteil 421 kann der Schneckendosierkopf 420 über das ringförmige Verbindungsteil 411 mit Strom versorgt werden und es kann eine gegenseitige Datenkommunikation stattfinden. Das ringförmige Verbindungsteil 411 seinerseits steht über ein Kabel 414 mit dem fixen Teil der Vorrichtung in Verbindung.

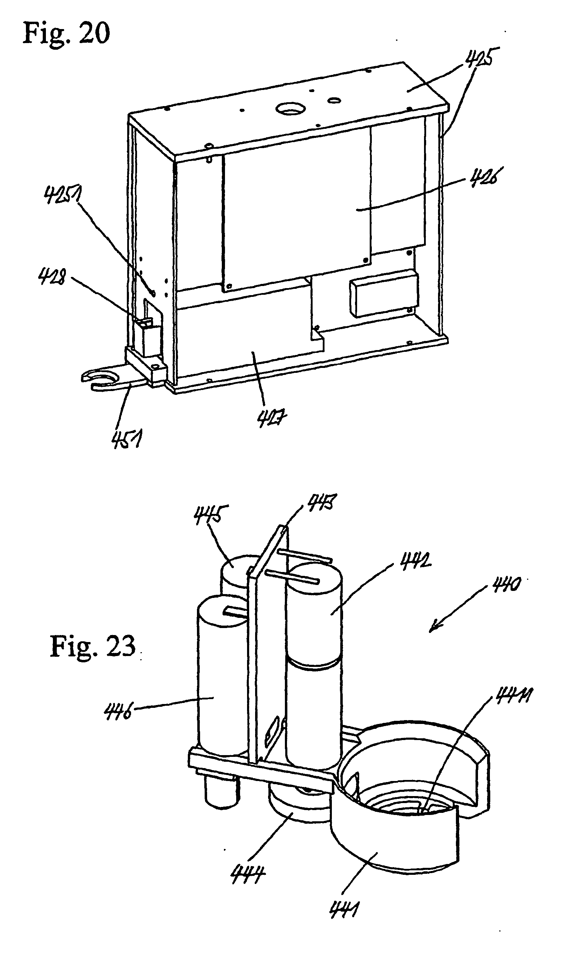

Der Schneckendosierkopf 420 umfasst eine Wägeeinheit mit einem Gehäuse 425, in dem die Steuerelektronik 426 und eine Waage 427 angeordnet sind. Vorzugsweise wird eine Waage mit einer Genauigkeit von 0,1 mg verwendet. Wie in Fig. 20 ersichtlich, ragt ein Auflageteil 428 der Waage 427 aus dem Gehäuse 425 heraus. Eine Dosiereinheit 430 liegt über eine Antriebseinheit 440 auf dem Auflageteil 428 auf und wird so zusammen mit der Antriebseinheit 440 von der Waage 427 gewogen.

Zur Erhöhung der Wägegenauigkeit kann neben der Waage 427 eine zweite Waage eingesetzt werden, die den Einfluss von allfälligen Vibrationen misst, welcher dann vom Messresultat der Waage 427 subtrahiert wird.

Unterhalb der Dosiereinheit 430 ist ein Einfüllstutzen 450 von einem fest mit dem Gehäuse 425 verbundenen Halter 451 abnehmbar gehalten. Der Einfüllstutzen 450 berührt die Dosiereinheit 430 nicht und beeinträchtigt somit die Wägung nicht. Durch seine Trennung von der Dosiereinheit 430 wird die Waage 427 mit einem geringeren Gewicht belastet, wodurch die Wägegenauigkeit erhöht wird. Ausserdem können die Dosiereinheit 430 und der Einfüllstutzen 450 separat von der Antriebseinheit 440 bzw. dem Halter 451 entfernt und gelagert werden.

Alternativ könnte auch ein mit der Dosiereinheit 430 verbundener Einfüllstutzen verwendet werden, was den Vorteil hätte, dass im Einfüllstutzen hängengebliebene Restsubstanz mitgewogen würde.

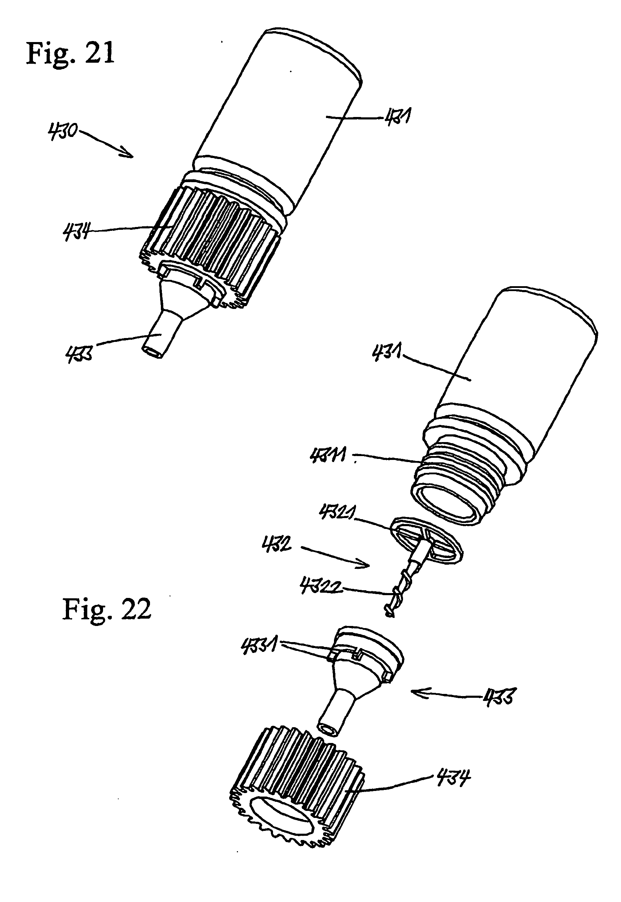

Der Aufbau der Dosiereinheit 430 ergibt sich aus den Fig. 21 und 22. Die Dosiereinheit 430 umfasst einen Vorratsbehälter 431, einen Extruder 432 mit einem Schneckenteil 4322 und einem Stegteil 4321, einen Dosiertrichter 433 und einen mit einer Verzahnung versehenen Deckel 434. Das Schneckenteil 4322 verjüngt sich von oben nach unten, d.h. vom Stegteil 4321 weg, was bewirkt, dass beim Dosieren von pulverförmiger Substanz diese beim Durchgang durch den Dosiertrichter 433 nicht verhockt. Der verzahnte Deckel 434 weist ein Innengewinde auf und wird auf ein Gewinde 4311 des Vorratsbehälters 431 geschraubt, wobei der Extruder 432 zwischen Deckel 434 und Vorratsbehälter 431 eingeklemmt wird. Das Einklemmen erfolgt über das Stegteil 4321, von dem sich ausserdem vorzugsweise in Fig. 22 nicht eingezeichnete Abstreifer in Richtung Schneckenteil 4322 erstrecken. Der Dosiertrichter 433 wird zwischen Deckel 434 und Extruder 432 drehbar gehalten und weist Nocken 4331 auf, die bei in der Antriebseinheit 440 eingesetzter Dosiereinheit 430 in Ausnehmungen 4411 eines Dosiereinheit-Aufnahmeteils 441 der Antriebseinheit 440 eingreifen.

Die Antriebseinheit 440 umfasst ausserdem einen auf einer mit Steuerelektronik versehenen Platine 443 befestigten Motor 442, der ein Getriebezahnrad 444 betätigt. Das Getriebezahnrad 444 greift durch eine Lücke im Dosiereinheit-Aufnahmeteil 441 hindurch in den verzahnten Deckel 434 der Dosiereinheit 430 ein und dreht diesen zusammen mit dem Vorratsbehälter 431 und dem Extruder 432, während der Dosiertrichter 433 durch die in die Ausnehmungen 4411 eingreifenden Nocken 4331 festgehalten wird. Durch die so entstehende Relativbewegung zwischen Dosiertrichter 433 und Extruder 432 wird Substanz aus dem Vorratsbehälter 431 durch den Dosiertrichter 433 hindurch in den Einfüllstutzen 450 gefördert.

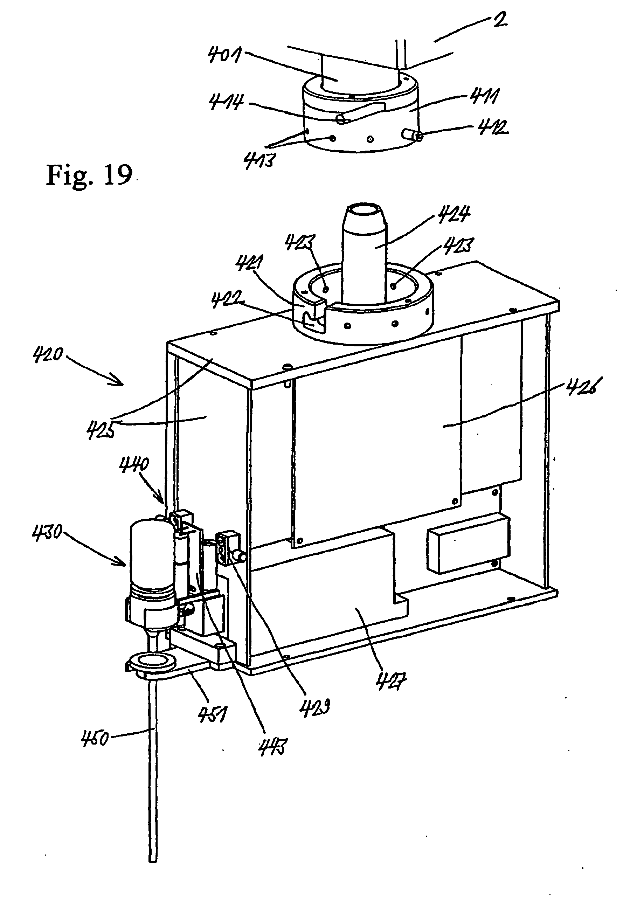

Der Motor 442 wird durch zwei Akkus 445 und 446 gespiesen, die beispielsweise durch die in Fig. 19 eingezeichnete, am Gehäuse 425 angebrachte Ladeeinrichtung 429 aufladbar sind. Die Ladeeinrichtung 429 ist als Schalter ausgebildet und steht nur während des Ladens der Akkus 445, 446 mit diesen in Kontakt. Während des Wägens berührt die Ladeeinrichtung 429 die Akkus 445, 446 nicht, so dass die Wägung nicht beeinträchtigt wird.

Alternativ könnte das Laden der Akkus 445, 446 auch in einer separaten, vom Schneckendosierkopf 420 getrennten Ladestation erfolgen, wobei hierzu die Antriebseinheit 440 einfach vom Auflageteil 428 der Waage 427 abgehoben und zur Ladestation transportiert werden müsste.

Die Steuerung des Motors 442 erfolgt über die Platine 443, die ihrerseits Steuersignale von der in der Wägeeinheit angeordneten Steuerelektronik 426 empfängt. Die Signalübertragung von der Wägeeinheit zur Platine 443 erfolgt mittels Licht durch eine in Fig. 20 sichtbare Öffnung 4251 im Gehäuse 425, so dass ein mechanischer Kontakt zwischen Wägeeinheit und Antriebseinheit 440 vermieden und die Wägung nicht beeinträchtigt wird.

Der Schneckendosierkopf 420 kann auf verschiedene Arten abgeändert werden. Insbesondere kann beispielsweise der Vorratsbehälter 431 so fixiert werden, dass er beim Dosieren nicht mitdreht. Vorzugsweise erstreckt sich dann vom sich drehenden Extruder 432 aus auch ein Mitnehmer in den Vorratsbehälter 431 hinein.

Das Dosieren kann allgemein kontinuierlich erfolgen, möglich sind aber auch periodische Substanzzugaben und ein Wägen zwischen den einzelnen Zugaben. Ausserdem ist ein Schütteln des Vorratsbehälters 431 während des Dosierens denkbar, so dass die darin enthaltene pulverförmige Substanz gelockert wird.

Zu den vorbeschriebenen erfindungsgemässen Vorrichtungen sind weitere konstruktive Variationen realisierbar. Hier ausdrücklich erwähnt seien noch:
- Bei allen beschriebenen Ausführungsbeispielen kann die Waage bzw. können die Waagen entweder am Werkzeug oder am Werkzeughalter 1 vorgesehen sein. Das Anordnen der Waage am Werkzeughalter 1 hat den Vorteil, dass bei Werkzeugwechsel nicht jedes Werkzeug eine Waage aufweisen muss. Dafür wird jeweils das Gewicht des ganzen Werkzeugs mitgemessen. Das Anordnen der Waage am Werkzeug hat demgegenüber den Vorteil, dass jeweils ein kleineres Gesamtgewicht gemessen wird. Dadurch werden die Messungen tendenziell genauer.
- Die Verbindung zwischen Werkzeughalter 1 und Werkzeug kann auch anders als mit Magneten oder mit Bajonettverschlussverbindungen ausgebildet sein. Denkbar sind beispielsweise Schraubverbindungen oder Klemmverbindungen. Die Verbindung sollte aber automatisch, d.h. nicht von Hand, herstellbar und wieder lösbar sein.
- Neben den beschriebenen Werkzeugen ist der Einsatz weiterer Werkzeuge möglich, die mit einer Verbindungsstelle zum Werkzeughalter und allenfalls einer Waage ausgestattet sind.

## Patentansprüche

1. Vorrichtung mit einem Werkzeughalter (1;401), der in einer x-Richtung und einer dazu senkrechten z-Richtung verstellbar ist, und einem am Werkzeughalter (1;401) befestigten Werkzeug (100;120;140;160;220;250;280;300;320; 350;420) in Form eines Dosierkopfs, wobei am Werkzeug oder am Werkzeughalter (1;401) eine Waage (9;145;165;241;296;318;333;369,374;427) angeordnet ist, mit welcher vom Werkzeug aufgenommene oder abgegebene oder abzugebende Substanz oder Kapseln (150) wägbar ist bzw. sind, dass die Substanz oder Kapsel(n) (150) von einer Dosiereinrichtung (105;125;143;163;223;281;301;323;355; 430,440) abgebbar oder aufnehmbar ist bzw. sind, die von der Waage (9;145;165;241;296;318;333;369,374;427) mitgewogen wird, und dass der Dosierkopf (100;120;140;160;220;250; 280;300;320;350;420) abzugebende Substanz vollständig mit sich mitführt, **dadurch gekennzeichnet, dass** die Dosiereinrichtung eine einen Vorratsbehälter (431) umfassende Dosiereinheit (430) und eine Antriebseinheit (440) aufweist, wobei die Dosiereinheit (430) ohne Schrauben zu lösen von der Antriebseinheit (440) abnehmbar und wieder an diese anbringbar ist.

2. Vorrichtung nach Anspruch 1, **dadurch gekennzeichnet, dass** die Waage (145;165;241;296; 318;333;369,374;427) am Werkzeug (140;160;220;280;300;320; 350;420) angeordnet ist und das Werkzeug ohne Schrauben zu lösen vom Werkzeughalter (1;401) abnehmbar und wieder an diesen anbringbar ist.

3. Vorrichtung nach Anspruch 1 oder 2, **dadurch gekennzeichnet, dass** die Dosiereinrichtung (223; 281;301;323;355;430,440) so an der Waage (241;296;318;333; 369,374;427) angeordnet ist, dass die Dosiereinrichtung ohne Schrauben zu lösen von der Waage abnehmbar und wieder an diese anbringbar ist, insbesondere durch Abheben und wieder Aufsetzen.

4. Vorrichtung nach einem der Ansprüche 1 bis 3, **dadurch gekennzeichnet, dass** der Werkzeughalter (1;401) um die z-Richtung drehbar ist und vorzugsweise zusätzlich in einer zu der x-Richtung und der z-Richtung senkrechten y-Richtung verstellbar ist.

5. Vorrichtung nach einem der Ansprüche 1 bis 4, **dadurch gekennzeichnet, dass** das Werkzeug ein Schneckendosierkopf (320;420) ist, der eine in einem an seinem unteren Ende mindestens teilweise offenen Rohr (323) um die z-Richtung vorwärts und rückwärts drehbare Schnecke (324;4322) umfasst, mit der Substanz aufnehmbar und abgebbar ist.

6. Vorrichtung nach Anspruch 5, **dadurch gekennzeichnet, dass** das untere offene Ende des Rohres (323) mit einer mit Löchern (329) versehenen Blende (328) verschliessbar ist und vorzugsweise im Rohr (323) ein auf der Schnecke (324) laufender Stempel (327) angeordnet ist, der beim Abgeben von Substanz bei sich drehender Schnecke (324) Substanz durch die Blende (328) drückt.

7. Vorrichtung nach Anspruch 6, **dadurch gekennzeichnet, dass** an der Blende (328) ein Abstreifer (334) vorhanden ist, der allenfalls an der Blende (328) hängende Substanz periodisch abstreift.

8. Vorrichtung mit einem Werkzeughalter (1), der in einer x-Richtung und einer dazu senkrechten z-Richtung verstellbar ist, und einem am Werkzeughalter (1) befestigten Werkzeug (140) in Form eines Dosierkopfs, **dadurch gekennzeichnet, dass** am Werkzeug oder am Werkzeughalter (1) eine Waage (145) angeordnet ist, mit welcher vom Werkzeug aufgenommene oder abgegebene oder abzugebende Kapseln (150) wägbar sind, und dass das Werkzeug ein Kapseltransportkopf (140) ist, mit welchem eine Kapsel (150) aufnehmbar und abgebbar ist.

9. Vorrichtung mit einem Werkzeughalter (1), der in einer x-Richtung und einer dazu senkrechten z-Richtung verstellbar ist, und einem am Werkzeughalter (1) befestigten Werkzeug (160) in Form eines Dosierkopfs, **dadurch gekennzeichnet, dass** am Werkzeug oder am Werkzeughalter (1) eine Waage (165) angeordnet ist, mit welcher vom Werkzeug aufgenommene oder abgegebene oder abzugebende Kapseln (150) wägbar sind, und dass das Werkzeug ein Matrizenkapseltransportkopf (160) ist, mit welchem matrizenartig angeordnete Kapseln (150) aufnehmbar und die Kapseln (150) einzeln, gemeinsam oder gruppenweise abgebbar sind.

10. Vorrichtung nach Anspruch 8 oder 9, **dadurch gekennzeichnet, dass** eine Kapsel (150) durch Ansaugen aufnehmbar ist.

11. Vorrichtung mit einem Werkzeughalter (1), der in einer x-Richtung und einer dazu senkrechten z-Richtung verstellbar ist, und einem am Werkzeughalter (1) befestigten Werkzeug (220) in Form eines Dosierkopfs, **dadurch gekennzeichnet, dass** am Werkzeug oder am Werkzeughalter (1) eine Waage (241) angeordnet ist, mit welcher vom Werkzeug aufgenommene oder abgegebene oder abzugebende Kapseln (150) wägbar sind, und dass das Werkzeug ein Kapselhandlingkopf (220) ist, mit welchem mindestens eine Kapsel (150) aufnehmbar ist, die in ihm, öffenbar ist.

12. Vorrichtung nach Anspruch 11, **dadurch gekennzeichnet, dass** die mindestens eine Kapsel (150) mit einer Hohlnadel (235) öffenbar ist.

13. Vorrichtung nach Anspruch 11 oder 12, **dadurch gekennzeichnet, dass** im Kapselhandlingkopf (220) der Inhalt der Kapsel (150) mit einer anderen Substanz mischbar ist.

14. Vorrichtung mit einem Werkzeughalter (1), der in einer x-Richtung und einer dazu senkrechten z-Richtung verstellbar ist, und einem am Werkzeughalter (1) befestigten Werkzeug (250) in Form eines Dosierkopfs, **dadurch gekennzeichnet, dass** am Werkzeug oder am Werkzeughalter (1) eine Waage (9) angeordnet ist, mit welcher vom Werkzeug aufgenommene oder abgegebene oder abzugebende Kapseln (150) wägbar sind, und dass das Werkzeug ein Matrizenkapselhandlingkopf (250) ist, mit welchem mehrere matrizenartig angeordnete Kapseln (150) aufnehmbar sind, die in ihm öffenbar sind.

15. Vorrichtung nach Anspruch 14, **dadurch gekennzeichnet, dass** die Kapseln (150) mit Hohlnadeln (235) öffenbar sind.

16. Vorrichtung nach Anspruch 14 oder 15, **dadurch gekennzeichnet, dass** im Matrizenkapselhandlingkopf (250) jeweils der Inhalt einer Kapsel (150) mit einer anderen Substanz mischbar ist.

17. Vorrichtung mit einem Werkzeughalter (1), der in einer x-Richtung und einer dazu senkrechten z-Richtung verstellbar ist, und einem am Werkzeughalter (1) befestigten Werkzeug (280;300) in Form eines Dosierkopfs, **dadurch gekennzeichnet, dass** am Werkzeug oder am Werkzeughalter (1) eine Waage (296;318) angeordnet ist, mit welcher vom Werkzeug aufgenommene oder abgegebene oder abzugebende Kapseln (150) wägbar sind, und dass das Werkzeug ein Kapselabgabekopf (280;300) ist, in dem eine Vielzahl von Kapseln (150) gespeichert sind, die einzeln, gemeinsam oder gruppenweise abgebbar sind.

18. Vorrichtung nach Anspruch 17, **dadurch gekennzeichnet, dass** die Kapseln (150) im Kapselabgabekopf (300) öffenbar sind.

19. Vorrichtung nach Anspruch 17 oder 18, **dadurch gekennzeichnet, dass** der Inhalt der Kapseln (150) im Kapselabgabekopf (300) mit einer anderen Substanz mischbar ist.

20. Vorrichtung nach einem der Ansprüche 1 bis 19, **dadurch gekennzeichnet, dass** sie eine, vorzugsweise am Werkzeughalter (1;401) angebrachte, Kamera (10) aufweist, mit welcher ein Bereich unterhalb des Werkzeughalters (1; 401) filmbar ist, sowie einen Steuercomputer (11) mit einer Bildverarbeitungseinheit, die die von der Kamera (10) gefilmten Bilder auswertet, wobei vorzugsweise aufgrund des Auswerteresultats die Verstellung des Werkzeughalters (1; 401) und allenfalls eine Auswechslung des Werkzeugs (100; 120;140;160;220;250;280;300;320;350;420) steuerbar ist.

21. Vorrichtung nach einem der Ansprüche 1 bis 20, **dadurch gekennzeichnet, dass** sie ein, vorzugsweise am Werkzeughalter (1;401) angebrachtes, Infrarotanalysegerät mit einem Infrarotsender, mit welchem Infrarotwellen in einen Bereich unterhalb des Werkzeughalters (1;401) strahlbar sind, und einem Infrarotsensor, mit welchem reflektierte Infrarotwellen messbar sind, aufweist, sowie einen Steuercomputer (11) mit einer Messwertverarbeitungseinheit, die die vom Infrarotsensor gemessenen reflektierten Infrarotwellen auswertet, wobei vorzugsweise aufgrund des Auswerteresultats die Verstellung des Werkzeughalters (1;401) und allenfalls eine Auswechslung des Werkzeugs (100;120;140; 160;220;250;280;300;320;350;420) und/oder die zu dosierende Menge an Substanz steuerbar ist.

22. Vorrichtung nach einem der Ansprüche 1 bis 21, **dadurch gekennzeichnet, dass** sie einen weiteren Werkzeughalter zur Befestigung eines weiteren Werkzeugs (100;120;140;160;180;200;220;250;280;300;320;350;420) umfasst, der in einer x-Richtung und einer dazu senkrechten z-Richtung verstellbar ist, wobei er vorzugsweise zusätzlich um die z-Richtung drehbar und/oder in einer zu der x-Richtung und der z-Richtung senkrechten y-Richtung verstellbar ist.

## Claims

1. Device having a tool holder (1;401), which can be displaced in an x direction and a z direction which is perpendicular to the x direction, and a tool (100;120;140; 160;220;250;280;300;320;350;420) in the form of a metering head, which is secured to the tool holder (1;401), wherein a balance (9;145;165;241;296;318;333;369,374;427), by means of which substance or capsules (150) which has/have been taken up or dispensed or is/are to be dispensed by the tool can be weighed, is arranged on the tool or on the tool holder (1; 401), wherein the substance or capsule(s) (150) can be dispensed or taken up by a metering means (105;125;143;163; 223;281;301;323;355;430,440) which is also weighed by the balance (9;145;165;241;296;318;333;369,374;427), and wherein the metering head (100;120;140;160;220;250;280;300;320;350; 420) carries all the substance which is to be dispensed with it, **characterized in that** the metering means has a metering unit (430), which comprises a storage vessel (431), and a drive unit (440), it being possible for the metering unit (430) to be removed from and refitted to the drive unit (440) without screws having to be undone.

2. Device according to claim 1, **characterized in that** the balance (145;165;241;296;318;333;369,374;427) is arranged on the tool (140;160;220;280;300;320;350;420), and the tool can be removed from and refitted to the tool holder (1;401) without screws having to be undone.

3. Device according to claim 1 or 2, **characterized in that** the metering means (223;281;301;323;355;430;440) is arranged on the balance (241;296;318;333;369;374;427) in such a way that the metering means can be removed from and refitted to the balance without screws having to be undone, in particular by being lifted off and put back on.

4. Device according to any one of claims 1 to 3, **characterized in that** the tool holder (1;401) can rotate about the z direction and can preferably also be displaced in a y direction which is perpendicular to the x direction and to the z direction.

5. Device according to any one of claims 1 to 4, **characterized in that** the tool is a screw metering head (320;420), which comprises a screw (324;4322) which can rotate forward and backward about the z direction in a tube (323), which is at least partially open at its lower end, and which can be used to take up and dispense substance.

6. Device according to claim 5, **characterized in that** the lower open end of the tube (323) can be closed off by a diaphragm (328) provided with holes (329), and there is preferably a ram (327), which runs on the screw (324) and presses substance through the diaphragm (328) as the screw (324) rotates when substance is being dispensed, arranged in the tube (323).

7. Device according to claim 6, **characterized in that** at the diaphragm (328) there is a stripper (334) which periodically strips off any substance adhering to the diaphragm (328).

8. Device having a tool holder (1), which can be displaced in an x direction and a z direction which is perpendicular to the x direction, and a tool (140) in the form of a metering head, which is secured to the tool holder (1), **characterized in that** a balance (145), by means of which capsules (150) which have been taken up or dispensed or are to be dispensed by the tool can be weighed, is arranged on the tool or on the tool holder (1), and **in that** the tool is a capsule-transporting head (140), by means of which a capsule (150) can be picked up and released.

9. Device having a tool holder (1), which can be displaced in an x direction and a z direction which is perpendicular to the x direction, and a tool (160) in the form of a metering head, which is secured to the tool holder (1), **characterized in that** a balance (165), by means of which capsules (150) which have been taken up or dispensed or are to be dispensed by the tool can be weighed, is arranged on the tool or on the tool holder (1), and **in that** the tool is a matrix-capsule-transporting head (160), by means of which capsules (150) which are arranged in the manner of a matrix can be picked up and the capsules (150) can be released individually, together or in groups.

10. Device according to claim 8 or 9, **characterized in that** a capsule (150) can be picked up by suction.

11. Device having a tool holder (1), which can be displaced in an x direction and a z direction which is perpendicular to the x direction, and a tool (220) in the form of a metering head, which is secured to the tool holder (1), **characterized in that** a balance (241), by means of which capsules (150) which have been taken up or dispensed or are to be dispensed by the tool can be weighed, is arranged on the tool or on the tool holder (1), and **in that** the tool is a capsule-handling head (220), by means of which at least one capsule (150) can be picked up, which capsule can be opened in the tool.

12. Device according to claim 11, **characterized in that** the at least one capsule (150) can be opened by means of a hollow needle (235).

13. Device according to claim 11 or 12, **characterized in that** in the capsule-handling head (220) the contents of the capsule (150) can be mixed with another substance.

14. Device having a tool holder (1), which can be displaced in an x direction and a z direction which is perpendicular to the x direction, and a tool (250) in the form of a metering head, which is secured to the tool holder (1), **characterized in that** a balance (9), by means of which capsules (150) which have been taken up or dispensed or are to be dispensed by the tool can be weighed, is arranged on the tool or on the tool holder (1), and **in that** the tool is a matrix-capsule-handling head (250), by means of which a plurality of capsules (150) which are arranged in the form of a matrix can be picked up, which capsules can be opened in the tool.

15. Device according to claim 14, **characterized in that** the capsules (150) can be opened by means of hollow needles (235).

16. Device according to claim 14 or 15, **characterized in that** in the matrix-capsule-handling head (250) the contents of one capsule (150) can in each case be mixed with another substance.

17. Device having a tool holder (1), which can be displaced in an x direction and a z direction which is perpendicular to the x direction, and a tool (280;300) in the form of a metering head, which is secured to the tool holder (1), **characterized in that** a balance (296;318), by means of which capsules (150) which have been taken up or dispensed or are to be dispensed by the tool can be weighed, is arranged on the tool or on the tool holder (1), and **in that** the tool is a capsule-dispensing head (280;300), in which a multiplicity of capsules (150) are stored, which capsules can be dispensed individually, together or in groups.

18. Device according to claim 17, **characterized in that** the capsules (150) can be opened in the capsule-dispensing head (300).

19. Device according to claim 17 or 18, **characterized in that** in the capsule-dispensing head (300) the contents of the capsule (150) can be mixed with another substance.

20. Device according to any one of claims 1 to 19, **characterized in that** it has a camera (10), which is preferably arranged on the tool holder (1;401) and which can be used to film an area below the tool holder (1;401), as well as a control computer (11) having an image-processing unit, which evaluates images which have been filmed by the camera (10), it being possible for the displacement of the tool holder (1;401) and if necessary a change of tool (100; 120;140;160;220;250;280;300;320;350;420) to be controlled preferably on the basis of the evaluation result.

21. Device according to any one of claims 1 to 20, **characterized in that** it has an infrared analysis unit, which is preferably arranged on the tool holder (1;401) and has an infrared transmitter, by means of which infrared waves can be radiated into an area below the tool holder (1;401), and an infrared sensor, which can be used to measure reflected infrared waves, as well as a control computer (11) having a measured-value-processing unit, which evaluates the reflected infrared waves measured by the infrared sensor, it preferably being possible for the displacement of the tool holder (1; 401) and if necessary a change of tool (100;120;140;160;220; 250;280;300;320;350;420) and/or the quantity of substance to be metered to be controlled on the basis of the evaluation result.

22. Device according to any one of claims 1 to 21, **characterized in that** it comprises a further tool holder for attachment of a further tool (100;120;140;160;180;200;220; 250;280;300;320;350;420) which can be displaced in an x direction and in a z direction which is perpendicular to the x direction, it preferably additionally being able to rotate about the z direction and/or to be displaced in a y direction which is perpendicular to the x direction and to the z direction.

## Revendications

1. Dispositif comprenant un porte-outil (1 ; 401) mobile dans une direction des x et dans une direction des z, perpendiculaire à cette dernière, et un outil (100 ; 120 ; 140 ; 160 ; 220 ; 250 ; 280 ; 300 ; 320 ; 350 ; 420) fixé audit porte-outil (1 ; 401) et revêtant la forme d'une tête doseuse, une balance (9 ; 145 ; 165 ; 241 ; 296 ; 318 ; 333 ; 369, 374 ; 427) étant placée sur l'outil ou sur le porte-outil (1 ; 401), permettant de peser de la substance ou des capsules (150) reçue(s), délivrée(s) ou devant être délivrée(s) par l'outil, la substance ou la (les) capsule(s) (150) pouvant être respectivement délivrée(s) ou reçue(s) par un système de dosage (105 ; 125 ; 143 ; 163 ; 223 ; 281 ; 301 ; 323 ; 355 ; 430, 440) pesé conjointement par la balance (9 ; 145 ; 165 ; 241 ; 296 ; 318 ; 333 ; 369, 374 ; 427), la tête doseuse (100 ; 120 ; 140 ; 160 ; 220 ; 250 ; 280 ; 300 ; 320 ; 350 ; 420) charriant intégralement avec elle de la substance devant être délivrée, **caractérisé par le fait que** le système de dosage présente une unité d'entraînement (440) et une unité de dosage (430) englobant un récipient de réserve (431), ladite unité de dosage (430) pouvant être enlevée de ladite unité d'entraînement (440), puis remise en place sur cette dernière sans que des vis doivent être desserrées.

2. Dispositif selon la revendication 1, **caractérisé par le fait que** la balance (145 ; 165 ; 241 ; 296 ; 318 ; 333 ; 369, 374 ; 427) est placée sur l'outil (140 ; 160 ; 220 ; 280 ; 300 ; 320 ; 350 ; 420), et ledit outil peut être enlevé du porte-outil (1 ; 401), puis remis en place sur ce dernier sans que des vis doivent être desserrées.

3. Dispositif selon la revendication 1 ou 2, **caractérisé par le fait que** le système de dosage (223 ; 281 ; 301 ; 323 ; 355 ; 430, 440) occupe, sur la balance (241 ; 296 ; 318 ; 333 ; 369, 374 ; 427), une position telle que ledit système de dosage puisse être enlevé de ladite balance, puis remis en place sur cette dernière sans que des vis doivent être desserrées, notamment par soulèvement et par remise en place.

4. Dispositif selon l'une des revendications 1 à 3, **caractérisé par le fait que** le porte-outil (1 ; 401) peut tourner autour de la direction des z et est, de préférence, additionnellement mobile dans une direction des y perpendiculaire à la direction des x et à ladite direction des z.

5. Dispositif selon l'une des revendications 1 à 4, **caractérisé par le fait que** l'outil est une tête doseuse (320 ; 420) à vis sans fin englobant une vis sans fin (324 ; 4322) qui peut tourner vers l'avant et vers l'arrière, autour de la direction des z, dans un tube (323) au moins partiellement ouvert à son extrémité inférieure, et par laquelle de la substance peut être reçue et délivrée.

6. Dispositif selon la revendication 5, **caractérisé par le fait que** l'extrémité inférieure ouverte du tube (323) peut être obturée par un diaphragme (328) muni de trous (329), et ledit tube (323) renferme, de préférence, un pilon (327) qui est mobile sur la vis sans fin (324) et qui lors de la délivrance de substance, alors que ladite vis sans fin (324) tourne, pousse de la substance à travers ledit diaphragme (328).

7. Dispositif selon la revendication 6, **caractérisé par** la présence, sur le diaphragme (328), d'un racleur (334) qui, si besoin est, racle périodiquement de la substance adhérant audit diaphragme (328).

8. Dispositif comprenant un porte-outil (1) mobile dans une direction des x et dans une direction des z, perpendiculaire à cette dernière, et un outil (140) fixé audit porte-outil (1) et revêtant la forme d'une tête doseuse, **caractérisé par le fait qu'**une balance (145) est placée sur l'outil ou sur le porte-outil (1), permettant de peser des capsules (150) reçues, délivrées ou devant être délivrées par l'outil, et **par le fait que** l'outil est une tête (140) transporteuse de capsules par laquelle une capsule (150) peut être reçue et délivrée.

9. Dispositif comprenant un porte-outil (1) mobile dans une direction des x et dans une direction des z, perpendiculaire à cette dernière, et un outil (160) fixé audit porte-outil (1) et revêtant la forme d'une tête doseuse, **caractérisé par le fait qu'**une balance (165) est placée sur l'outil ou sur le porte-outil (1), permettant de peser des capsules (150) reçues, délivrées ou devant être délivrées par l'outil, et **par le fait que** l'outil est une tête (160) transporteuse de capsules du type matrices par laquelle des capsules (150), agencées à la manière de matrices, peuvent être reçues et lesdites capsules (150) peuvent être délivrées individuellement, conjointement ou par groupes.

10. Dispositif selon la revendication 8 ou 9, **caractérisé par le fait qu'**une capsule (150) peut être reçue par aspiration.

11. Dispositif comprenant un porte-outil (1) mobile dans une direction des x et dans une direction des z, perpendiculaire à cette dernière, et un outil (220) fixé audit porte-outil (1) et revêtant la forme d'une tête doseuse, **caractérisé par le fait qu'**une balance (241) est placée sur l'outil ou sur le porte-outil (1), permettant de peser des capsules (150) reçues, délivrées ou devant être délivrées par l'outil, et **par le fait que** l'outil est une tête (220) manipulatrice de capsules, par laquelle peut être reçue au moins une capsule (150) qui peut être ouverte dans ladite tête.

12. Dispositif selon la revendication 11, **caractérisé par le fait que** l'au moins une capsule (150) peut être ouverte à l'aide d'une aiguille creuse (235).

13. Dispositif selon la revendication 11 ou 12, **caractérisé par le fait que** dans la tête (220) manipulatrice de capsules le contenu de la capsule (150) peut être mélangé à une autre substance.

14. Dispositif comprenant un porte-outil (1) mobile dans une direction des x et dans une direction des z, perpendiculaire à cette dernière, et un outil (250) fixé audit porte-outil (1) et revêtant la forme d'une tête doseuse, **caractérisé par le fait qu'**une balance (9) est placée sur l'outil ou sur le porte-outil (1), permettant de peser des capsules (150) reçues, délivrées ou devant être délivrées par l'outil, et **par le fait que** l'outil est une tête (250) manipulatrice de capsules du type matrices, par laquelle peuvent être reçues plusieurs capsules (150) qui sont agencées à la manière de matrices et peuvent être ouvertes dans ladite tête.

15. Dispositif selon la revendication 14, **caractérisé par le fait que** les capsules (150) peuvent être ouvertes à l'aide d'aiguilles creuses (235).

16. Dispositif selon la revendication 14 ou 15, **caractérisé par le fait que** dans la tête (250) manipulatrice de capsules du type matrices le contenu respectif d'une capsule (150) peut être mélangé à une autre substance.

17. Dispositif comprenant un porte-outil (1) mobile dans une direction des x et dans une direction des z, perpendiculaire à cette dernière, et un outil (280 ; 300) fixé audit porte-outil (1) et revêtant la forme d'une tête doseuse, **caractérisé par le fait qu'**une balance (296 ; 318) est placée sur l'outil ou sur le porte-outil (1), permettant de peser des capsules (150) reçues, délivrées ou devant être délivrées par l'outil, et **par le fait que** l'outil est une tête (280 ; 300) délivreuse de capsules, dans laquelle est stockée une multiplicité de capsules (150) pouvant être délivrées individuellement, conjointement ou par groupes.

18. Dispositif selon la revendication 17, **caractérisé par le fait que** les capsules (150) peuvent être ouvertes dans la tête (300) délivreuse de capsules.

19. Dispositif selon la revendication 17 ou 18, **caractérisé par le fait que** dans la tête (300) délivreuse de capsules le contenu des capsules (150) peut être mélangé à une autre substance.

20. Dispositif selon l'une des revendications 1 à 19, **caractérisé par le fait qu'**il comporte une caméra (10) de préférence installée sur le porte-outil (1 ; 401) et permettant de filmer une zone située au-dessous dudit porte-outil (1 ; 401), ainsi qu'un ordinateur de commande (11) équipé d'une unité de traitement d'images qui interprète les images filmées par ladite caméra (10), le réglage du porte-outil (1 ; 401), et éventuellement un remplacement de l'outil (100 ; 120 ; 140 ; 160 ; 220 ; 250 ; 280 ; 300 ; 320 ; 350 ; 420), pouvant être de préférence commandés sur la base du résultat de l'interprétation.

21. Dispositif selon l'une des revendications 1 à 20, **caractérisé par le fait qu'**il comporte un appareil d'analyses par infrarouges qui est, de préférence, installé sur le porte-outil (1 ; 401) et comprend un émetteur d'infrarouges par lequel des ondes infrarouges peuvent être diffusées dans une zone située au-dessous dudit porte-outil (1 ; 401), et un détecteur d'infrarouges par lequel des ondes infrarouges réfléchies peuvent être mesurées ; ainsi qu'un ordinateur de commande (11) doté d'une unité de traitement de valeurs mesurées, qui interprète les ondes infrarouges réfléchies mesurées par le détecteur d'infrarouges, le réglage du porte-outil (1 ; 401) et éventuellement un remplacement de l'outil (100 ; 120 ; 140 ; 160 ; 220 ; 250 ; 280 ; 300 ; 320 ; 350 ; 420), et/ou la quantité de substance devant être dosée, pouvant être de préférence commandé(e)s sur la base du résultat de l'interprétation.

22. Dispositif selon l'une des revendications 1 à 21, **caractérisé par le fait qu'**il comprend un porte-outil supplémentaire qui est destiné à la fixation d'un outil supplémentaire (100 ; 120 ; 140 ; 160 ; 180 ; 200 ; 220 ; 250 ; 280 ; 300 ; 320 ; 350 ; 420) et est mobile dans une direction des x et dans une direction des z, perpendiculaire à cette dernière, sachant qu'il peut, de préférence, additionnellement tourner autour de ladite direction des z, et/ou peut être réglé dans une direction des y perpendiculaire à ladite direction des x et à ladite direction des z.
